(19) Europäisches Patentamt
European Patent Office
Office européen des brevets

(11) **EP 2 774 467 A1**

(12) **DEMANDE DE BREVET EUROPEEN**

(43) Date de publication:
**10.09.2014 Bulletin 2014/37**

(51) Int Cl.:
***A01C 21/00*** *(2006.01)*      ***G06F 17/18*** *(2006.01)*
***G06K 9/62*** *(2006.01)*

(21) Numéro de dépôt: **14366001.7**

(22) Date de dépôt: **03.03.2014**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**

(30) Priorité: **05.03.2013 FR 1300488**

(71) Demandeur: **Polyor SARL
54000 Nancy (FR)**

(72) Inventeur: **Claude, Pierre-Philippe
54000 Nancy (FR)**

(54) **Procédé pour la préconisation et le dosage de la fertilisation phospho-potassique et magnésique (PKMG) de cultures agronomiques**

(57)      Diagnostique de l'état P, K et Mg de sols, et de préconisation des apports d'engrais PKMg par mise en relation de *pseudo* variables AGRO décrivant le rendement de cultures, et des *pseudo* variables PÉDO décrivant le caractère physicochimique des sols arables associés aux variables AGRO, comprenant ;
• l'échantillonnage d'une parcelle et/ou d'un îlot agricole en particulier,
• l'analysé physico - chimiquement de l'échantillon pour obtenir les valeurs de PÉDO,
• la compilation préalable d'un jeu de données comprenant les variables AGRO et PÉDO provenant d'un cadre géographique auquel appartiennent les susdits îlots et/ou parcelles agricoles,
• une analyse multidimensionnelle d'AGRO et PÉDO, et l'obtention des coordonnées des *composantes principales* (CPn) les plus corrélées avec chacune des variables AGRO et PÉDO,
• suite à une *analyse co-inertielle* (COIA) sur la base des deux susdites analyses multidimensionnelles AGRO et PÉDO, la mise en relation des valeurs des *pseudo* variables AGRO et PÉDO par division des valeurs d'AGRO et PÉDO par les coordonnées d'une des CPn issues de cette COIA la plus corrélée avec une ou l'autre des variables AGRO et PÉDO établissant une corrélation *intrinsèque,* avantageusement linéaire, ⟋ en référence à un rendement attendu, la comparaison d'AGRO et PÉDO provenant de la parcelle aux valeurs AGRO et PÉDO des susdites corrélations intrinsèques entre *pseudo* variables correspondant à ce rendement.

Figure 1

EP 2 774 467 A1

**Description**

**DOMAINE TECHNIQUE DE L'INVENTION**

Diagnostique et préconisation de la fertilisation minérale des cultures agronomiques, y compris et notamment à l'aide d'engrais phospho - potassique (PK) et/ou magnésique (Mg).

**ÉTAT DE LA TECHNIQUE**

***La fertilisation raisonnées ; existe-il réellement des seuils critiques pour P, K et Mg ?***

Le pilotage intra - saisonnier des apports d'engrais azotés permettant de combler d'éventuelles carences en N de cultures agronomiques est assez bien rodé (*cf.* Comifer 2011). En effet, les coefficients d'utilisation apparente de l'azote sont élevés par rapport à ceux d'autres éléments, y compris et plus particulièrement ici le phosphore (P), le potassium (K) et le magnésium (Mg). En effet, les apports d'engrais P, K et Mg ont surtout vocation à enrichir le sol, et qu'indirectement et postérieurement contribuer à l'alimentation minérale des cultures subséquentes. Contribuant qu'indirectement au pool d'ions P, K et Mg (PKMg) assimilables par la culture, la fertilisation P, K, voire Mg (PK(Mg)) sont pondéralement moins performantes que celle de l'azote.

Pourtant, et malgré cette chimie dans le sol foncièrement différentes, les préconisations d'engrais P, K, voire Mg sont établies, idéalement aux yeux de l'homme du métier, à partir de courbes décrivant la réponse (lire : l'augmentation, la progression) des rendements agronomiques en fonction de l'augmentation des teneurs P, K et/ou Mg des sol et/ou les quantités (doses ; d) d'engrais P, K, et/ou Mg apportés.

Actuellement, la fertilisation PK des sol implique l'application d'un CME-PK (coefficient multiplicatif d'exportation - phosphore/potassium ; *cf.* Comifer 2011, 2007) qui une fois appliqué au rendement agronomique moyen de la parcelle et ces teneurs en P et K estimées permet de calculer une certaine dose hectare PK à apporter. L'évaluation et le renforcement de la fertilité PKMg des sols ce fait surtout à l'aide d'analyses pondérales (p/p), voire à l'aide d'isothermes d'adsorption pédo-spécifiques (eg. Morel *et al.* 2009, Denoroy et al. 2012, Colomb et al. 2007, Bolland et al. 1999). En ce sens, la fertilisation PK, voire Mg, est donc et traditionnellement fondée sur plusieurs notions (*cf.* Comifer 2001, 2007) ;

- la teneur du sol en $P_{inorganique}$ (Pi) et K
- le type de test utilisé pour déterminer la teneur en PK du sol
- l'exigence et/ou le rendement attendu de la culture
- les besoins en fonction du rendement de la culture
- le type de sol et/ou son agroclimat
- le nombre d'années sans fertilisation PK
- les notions de teneurs critiques (du sol) dites de "renforcement" (Tr) et/ou "impasse" (Ti).

Faute d'avoir pu établir l'ensemble des relations [RDT : $P_{sol}$] pour les principales cultures agronomique sur l'ensemble des types de sols, selon les divers agro - climats, *etc.*, un seuil $P_{sol}$ critique unique à un niveau de RDT donné est actuellement indéfendable. Au lieu, deux types de seuils P et K, Tr (teneur du sol en P, K dite de "renforcement") et Ti (teneur du sol en P, K dite "d'impasse") sont actuellement considérés comme impératifs lors du dosage et la préconisation des apports d'engrais PK ; voir en ce sens les communiqués du Comifer 2001 et, surtout, 2007. Une teneur de sol inférieur à Tr implique aujourd'hui qu'il est nécessaire d'apporter des engrais P/K, faute de quoi le rendement potentiel de la culture pourrait être compromis ; une teneur supérieure à Ti implique elle qu'il n'est pas nécessaire d'apporter des engrais P/K ; entre Tr et Ti ont parle parfois d'apporter une *fumure d'entretient. Nb.* L'apport d'engrais Mg au sol est lui généralement préconisé comme complément aux apports d'engrais P et K, surtout si ceux-ci sont importants, question de maintenir un équilibre rationnelle P / K / Mg.

Or, et en sus du fait que les notions d'exigences et de CME x RDT me semble redondantes (i.e. les cultures à haut rendements exportent nécessairement plus de P, K et Mg → elles sont de facto plus exigeantes), il me semble que ces notions compliquent et confondent inutilement la fertilisation PK(Mg). Par exemple, comment distinguer entre Tr et Ti si les deux seuils sont supposément critiques et définissent une valeurs en dessous / dessus de laquelle il faut intervenir, ... ou non ?. Pourquoi ce flottement au dessus de Tr mais pas en dessous de Ti ? De plus et encore une fois, cette distinction appliquée à l'ensemble d'une superficie agricole utile (SAU), française plus particulièrement ici à titre d'exemple, suppose une pléthore de relations [RDT : $P_{sol}$], y compris de *courbes de réponses* des RDT aux apports d'engrais P/K pour chacune des ces, nombreuses, situations culture x type de sol x agroclimat. Or, ces relations ne sont pas aujourd'hui établies pour l'ensemble de ces cas, loin de là ; à titre d'exception voir les travaux de Colomb *et al.* 2007, Denoroy *et al.* 2012, à titre d'exemple.

*Le paradigme Mitscherlich ;* les deux composantes de la disponibilité PKMg in situ

En plus des susdits isothermes d'adsorption, l'élaboration de grilles de préconisation P, mais aussi dans une moindre mesure K, est le plus souvent fondée sur des équations dites de Mitscherlich (eg. Colomb et al. 2007, Denoroy et al. 2012, Bolland et al. 1999, Lewis et al. 1991, Urrisi et al. 1998, Dodd et Mallarino 2005, Balba et Bray 1956 - Soil Sci. Soc. Am. J. 1956, Vol. 20 No. 4, p. 515-518). Cette équation, maintes fois rapportée peut être exprimée sous bien des formes, y compris (*cf.* Urrisi et al. 1998) ;

$$Y = A \cdot [1 - exp(-c \cdot dPKMg)] \mid dPKMg = b \cdot [PKMg] + PKMg$$

lorsque que ;

> Y = rendement agronomique, généralement en kg ou qx de grains / hectare
> A = constante empirique représentant Y maximum
> b = constante empirique représentant la progression de la disponibilité de l'ensemble des ions P, K et Mg dans le sol (dPKMg), y compris de ceux provenant directement d'apports d'engrais PKMg (x), selon la teneur PKMg initiale du sol ([PKMg]), généralement en mg/kg, ou encore kg/ha
> c = constante empirique représentant l'efficience de dPKMg
> x = apport de PKMg sous forme d'engrais

A noter qu'il s'agit ici d'une équation multi - variée *non linéaire.* L'obtention des coefficients A, b et c nécessite donc a priori une analyse numérique (Filbet 2009 ; §3 *Les systèmes non linéaires*), le plus souvent implémentée à des algorithmes informatisé *simplexreg* (The R Project) ou NLIN (The SAS Institut). Or, ici, et puisqu'il ne s'agit pas de renouveler une $n^{ième}$ fois l'application de l'équation Mitscherlich, nous pouvons supposer que $b \approx 1,00$ pour les teneurs en $P_{Olsen}$ du sol, et donc que la disponibilité dP est simplement la somme de tels dosages ($1 \cdot [PKMg]$) et des apports d'engrais, PKMg. Cela est raisonnable, du moins pour $P_{Olsen}$ puisque Urrisi et al. 1998 ont rapporté que dans ce cas b = 1,19. Cette approximation légitime évite le recours à la susdite analyse numérique informatisée de tels systèmes non linéaires.

Or, dans la pratique, l'application de l'équation de Mitscherlich exige une gamme de valeurs dPKMg assez large pour permettre de repérer un certain point critique, un seuil en sorte, pour [PKMg] en dessous duquel les rendements agronomiques, Y, ne sont plus assuré. Un telle gamme est difficilement obtenue pour un site, ou sol, en une campagne ; il faut généralement compiler des données multi - sites et/ou pluriannuelles (*eg.* Colomb et al. 2007, Dodd et Mallarino 2005). Faute de quoi les équations Mitscherlich ainsi paramétrées seront trop étroites (*eg.* Urrisi et al. 1998) et/ou peu précises (Mallarino et Blackmer 1992) ; voir *infra* APPLICATIONS BIOINDUSTRIELLES ET AGRONOMIQUES.

*L'universalité de dPKMg ; un* **graal** *agronomique ?*

La simplification, l'*universalisation* en sorte, des préconisations d'engrais PK est recherchée. Par exemple, Jordan-Meille 2009 rapporte, fort utilement, les préconisations P pour diverses pays européens. Ce qu'il y a de remarquable c'est que, malgré un même principe dégressif en fonction de la progression des teneurs des sols en P inorganique ([Pi] ; mg-P / kg-sol) ; pour une même analyse, les écarts entre les Ti pour ces divers pays vont de 17 en Italie, à plus de 65 en Belgique. Renneson *et al.* 2011 rapportent que pour la Belgique des coefficients de détermination ($R^2$) pour les relations entre RDT (orge) et [Pi] *d'au plus* 50%, et encore sur un même site comprenant des parcelles établies en ... 1967, et cela plus ou moins indépendamment du mode d'extraction de Pi. Ce type de parcelles longues durées étant somme toutes assez rare, pour cause (eg. Colomb *et al.* 2007), ces relations particulières à un site sont difficilement ... universalisables.

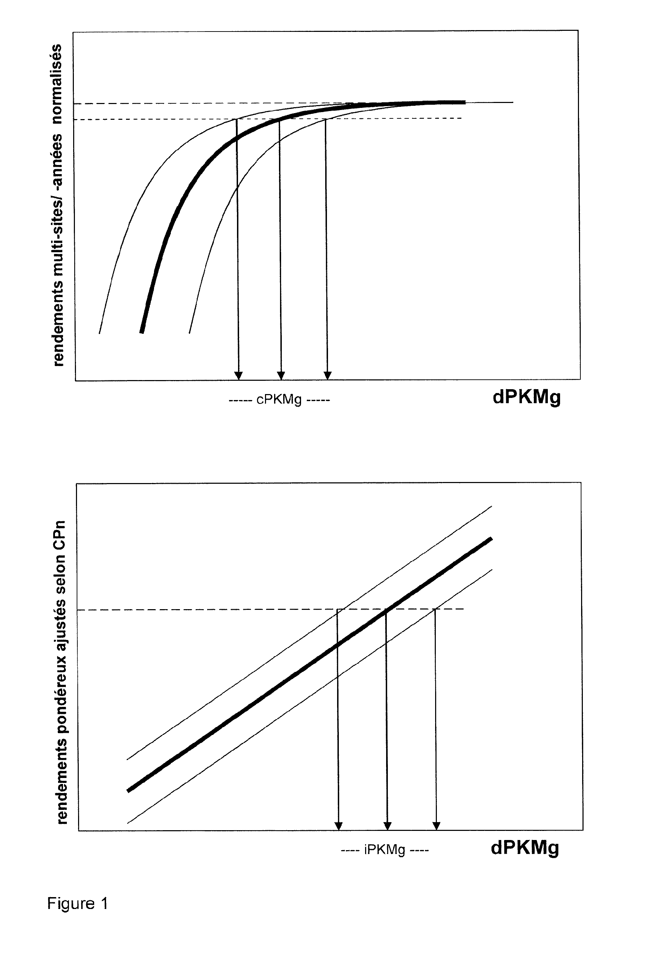

Schvartz et Julien 2009 utilisèrent les données pédologiques BDAT (*Base de données d'analyses de terre ;* www.gissol.fr) pour comparer des méthodes de détermination de $[Pi]_{sol}$. Or, bien que corrélées entre eux, les indices Olsen, JH (Joret-Hébert) et Dyer sont peu ou pas corrélés avec RDT ; voir ici la Figure 1 illustrant cet aspect du problème technique. A noter cependant que la méthode dite Olsen (Olsen *et al.* 1954 ; Fardeau *et al.* 1988) est l'indice le "moins pire". De plus, selon Schvartz et Julien 2009 la règles [Olsen x 2 = JH ; JH x 2 = Dyer] semble elle aussi tenir, sans pour autant préciser les préconisations P sur la base de ces différents indices. Notons enfin que ce type de proportions entre divers type d'indices P est loin de faire l'unanimité.

Enfin, Denoroy *et al.* 2012 et Morel *et al.* 2011 cherchent eux expressément à simplifier (lire : universaliser) certains coefficients applicable à un modèle plus mécaniste décrivant la phytodisponibilité du Pi. En effet, la notion "d'universalité" fait partie intégrante de leur démarche. Pour preuve, et selon Denoroy *et al.* 2012 (op. *cit. p*) ;

- "Pour une même culture, les courbes de réponse à l'offre en P du sol estimée par une même méthode analytique vont être ***différentes entre types de sol contrastés,*** entraînant de grandes difficultés à transposer des acquis expérimentaux d'une situation à une autre". (p220)
- "[E]stimer de façon convaincante et plus ***universelle*** l'offre en P du sol perçue par les cultures, le critère pour ceci étant l'unicité, entre situations de sol contrastées". (p221)
- "Pour ***normaliser*** les réponses des cultures entre ***situations de potentiel pédo-climatique variées,*** les rendements étaient exprimés en indice de rendement, relativement au rendement potentiel de l'année." (p221)
- "[É]valuer la pertinence pratique de nouveaux indicateurs, en particulier du point de vue de leur ***"universalité"*** entre situations expérimentales /.../" (p223)
- "Cette validité peut être évaluée au niveau local (essai par essai) ou global /.../ rendre compte de la ***réponse de la culture pour toutes les situations*** traitées ensemble." (p223)
- "Un indicateur va être d'autant plus ***"universel"*** (et ses références d'autant plus généralisables) que ce seuil tendra à être ***unique*** pour toutes les situations." (p223)

Malgré tous ces appels à "l'universalité" des diagnostiques et préconisations, l'approche de Denoroy *et al.* 2012 et Morel *et al.* 2011 intégrant le calcul d'une certaine variable, E, à partir de deux autres paramètre, Cp et Pr, n'est en fait qu'une nouvelle mesure de la phytodisponibilité du P, variable certes plus intégrale, mécaniste et précise que celles d'Olsen, JH ou Dyer, mais néanmoins toujours très pédo-spécifique (*cf.* Morel *et al.* 2001, page 6 et tableau 1), et donc pas universelle ou même généralisable. Nous revenons donc en sorte au problème initiale, mais cette fois-ci via une mesure variable E un peu plus performante (*cf.* Denoray *et al.* 2012, tableaux 2 et 3). En effet, les valeurs de E (mg-P / kg de terre fine) calculées à partir de Cp et Pr varies par plus d'un ordre de grandeur pour une même valeur de Cp (mg-P/L suspension terre:eau), et cela entre les sols appartenant à la SAU française relativement comparables en terme de pH, [argile] et % matière organique, et définitivement tous arables. In fine, l'universalité, même à l'intérieur d'une même SAU nationale, des diagnostiques et préconisations PKMg mitscherlichiennes est loin d'être assurée (*cf.* Mombiela et al. 1981, Urrisi et al. 1998).

***Durabilité et dPKMg optimal*** *; deux concepts séparés*

On parle beaucoup de développement et d'agriculture durable. Or, il ne faut pas confondre durable et optimal lorsqu'on parle de dPKMg. Une dose PKMg optimale ne permettra pas nécessairement d'enrichir un sol appauvri. De même, un sol appauvri peut très bien soutenir durablement un rendement quelconque si la dose optimale, au sens mitscherlien, est apportée. Pour faire simple, disons qu'un sol cultivés sera immanquablement appauvri par rapport à une sol peu, pas ou ayant été jamais cultivé. Durabilité ici n'implique pas le retour du sol à son état naturelle (originelle, *pristine* angl.), mais plutôt son entretient, en sorte, sans dégradation ou appauvrissement continuel, en l'état au temps $t_o$ ; un *statut quo,* en sorte.

*Sigles et définitions*

**ACP** (analyse par composantes principales) : "méthode de la famille de l'analyse des données et plus généralement de la statistique multivariée, qui transforme des variables liées entre elles en nouvelles variables dé - corrélées les unes des autres (lire : composantes, ou axes, principales, ***CPn***) ; elle permet de réduire le nombre de variables et de rendre l'information moins redondante.

**Agreste** (*cf.* statistiques agronomiques en ligne du ministère de l'agriculture FR)

**AGRO** : variables agronomiques, ici essentiellement les rendements céréaliers moyens aux niveaux départemental et régional en France (*cf.* Tableaux 1 et 2) ; ces données variables seront mise en relations avec les CPn issues des ACP et/ou COIA. Les variables AGRO sont ici choisies parmi un groupe non exclusif et non exhaustif comprenant les rendements agronomiques de grandes cultures, non irriguées, prédominantes et donc représentatives du potentiel de rendement du territoire en question, telles que les cultures céréalières d'hiver et de printemps, les cultures oléagineuses d'hivers et de printemps, les cultures protéagineuses d'hiver et de printemps.

**BDAT** (Base de données d'analyses de terre) : voir http://bdat.gissol.fr/geosol/index.php, ainsi que Schvartz et Jullien 2009

**CME** (coefficient multiplicatif d'exportation), ... du phosphore, du potassium (CME-PK ; Comifer 2001, 2007) **COIA** (analyse co-inertielle) : analyse statistique exploratoire multidimensionnelle de tableaux (***m,p***) multiples comprenant m individus (lire : observations) décrites par ***p*** variables (colonnes du tableau (matrice) X), et d'autre part par ***q*** autres variables (colonne (matrice) Z). Les variables p et q sont diffèrent ici dans leur "nature" ; elles sont par exemple soit pédologiques (PÉDO) décrivant la nature physico-chimique du sol, soit agroclimatiques (AGRO) décrivant le potentiel de rendement de cultures agronomiques. COIA est plus utilisée avec des données concernant l'effet de l'environnement sur la spéciation animale et/ou végétale. Comme pour l'ACP, COIA va générer les composantes, ou axes, principales,

*CPn,* par rapport aux quelles chacune des p et q variables AGRO et PÉDO pourront être ordonnées.

**fumure d'entretien :** apport d'engrais PKMg applicables à des sols où la biodisponibilité est supposément intermédiaire, cette préconisation devant de compenser par l'apport d'engrais les besoins de la culture (*cf*. Comifer 2001 , 2007)

**Gissol** (groupement d'intérêt scientifique pour les sols ; www. gissol.fr)

**PÉDO** : variables pédologiques (édaphiques), ici les moyens des variables BDAT cantonales aux niveaux départemental et régional en France (*cf*. Tableaux 1 et 2) ; ces données variables seront mise en relations avec les CPn issues des ACP et/ou COIA. Les variables PÉDO sont ici choisies parmi un groupe non exclusif et non exhaustif comprenant le pH, le carbone organique, la capacité d'échange cationique (CEC), les teneurs élémentaires en $N_{organique}$ et $P_{organique}$, en P, K, Ca, Mg, Fe et autre oligo-éléments, le % de saturation cationique de la CEC, la granulométrie du sol, y compris les proportions d'argile, de limons et sables, fins et grossiers, et/ou de toute autre variable descriptive de la nature et/ou du fonctionnement, biologique, physico-chimique ou mécanique, du sol.

**PKMg** : apports pondéreux d'engrais P, K et Mg, généralement exprimés en kg/ha ou mg/kg de sol de l'oxyde $P_2O_5$, $K_2O$ et/ou MgO ; dans les cas d'apports d'un élément, on note simplement P, K ou Mg.

**[PKMg]** : teneurs du sol en P, K et Mg, ou de leurs oxydes, hors, ou du moins avant, l'apport de PKMg, généralement exprimés en kg/ha ou mg/kg de sol de l'oxyde $P_2O_5$, $K_2O$ et/ou MgO ; dans le cas de teneurs d'un élément on note [P], [K] ou [Mg].

**dPKMg** : disponibilité des ions P, K et Mg, soit ici essentiellement la somme PKMg + [PKMg] peut après l'apport de PKMg ; il est aussi possible d'affiner dPKMg, au sens de Urrisi et al. 1998 et Mombiela et al. 1981 en introduisant un coefficients empirique, b, de manière à ce que dPKMg = b * [PKMg] + PKMg. Dans le cas de disponibilités d'un élément, on note dP, dK ou dMg.

**cPKMg** : seuils critiques, soit en terme de dPKMg ou plus simplement [PKMg] en dessous duquel le potentiel de rendement (RDT) de la culture en cour est compromis, au sens mitscherlichien du moins (*cf*. Figure 1, haut) ; dans le cas de seuils critiques d'un élément, on note cP, cK ou cMg.

**iPKMg** : valeurs indicatives de dPKMg, progressives et proportionnelles aux rendements (RDT) attendus, assurant le maintien du niveau de fertilité P, K et/ou Mg du sol à un moment, to, soit ici et à titre d'exemple pour la SAU (superficie agricole utile) française selon les données BDAT compilées entre 2005 et 2009 ; dans le cas de valeurs indicatives d'un éléments, on note iP, iK ou iMg.

**Pseudo variable :** division d'une variable agronomique (AGRO) ou pédologique (PÉDO) par une même coordonnée de la composante principale (CPn X ou Y ; *cf.* ici Tableau 2), dite aussi axe factorielle, avantageusement issue ici d'une analyses co-inertielle (COIA) la mieux corrélée avec une série de l'une ou l'autre desdites variables AGRO ou PÉDO.

**RDT** (Rendement agronomique ; kg/ha, g/m2, kg/m2, etc.)

**relation** (ou corrélation) **intrinsèque :** au sein d'un même jeu de données, inertie d'une variable par rapport à une autre une fois cette influence mutuelle isolée, en sorte, de celles des autres variables entre elles. Pour ce faire, il faut effectuer une COIA permettant d'ajuster les deux variables en question à la première ou deuxième composante principale (CPn) la mieux corrélée avec l'une ou l'autre variable. Il en résulte une (cor)relation épurée, en sorte, de l'influence des inerties attribuables aux autres variables du jeux de donnée, et donc beaucoup plus forte.

**relation** (ou corrélation) **extrinsèque :** au sein d'un même jeu de données, l'inertie d'une variable par rapport à une autre telle qu'influencée par l'ensemble des autres variables et leurs interactions mutuelles. Cette profusion d'interactions entre toutes les variables entres elles confond jusqu'à rendre illisible une éventuelle interaction plus forte entre deux variables observées en faisant abstraction des autres variables. Par exemple, voir ici à la Figure 1 l'absence de corrélation appréciables entre les rendements (RDT) de blé tendre d'hiver (BTH) et les teneurs en P des sols.

**Tr** (teneur / seuil critique "renforcement") ; valeurs critiques des teneurs en P des sols applicables aux sols supposément faiblement pourvus où la biodisponibilité du P est faible et sur les quels on veut implanter une culture d'exigence moyenne à forte ; en principe, les quantité d'engrais à épandre seront supérieures aux exportations (*cf*. Comifer 2001, 2007)

**Ti** (teneur / seuil critique "impasse") ; valeurs critiques des teneurs en P des sols applicables aux sols où la biodisponibilité est supposément élevée et pour des cultures peu à moyennement exigeantes ; si la teneur du sol est supérieure à ce seuil « impasse », il n'est pas utile d'apporter de l'engrais (*cf*. Comifer 2001, 2007)

## DIVULGATION DE L'INVENTION

*Problème technique*

Le problème technique provient du fait qu'il est déjà difficile d'établir le lien entre la disponibilité élémentaire (dPKMg) et la somme de la fertilité intrinsèque ([PKMg]) et des apports d'engrais (PKMg), sans avoir par la suite à élaborer une certaine relation mitscherlichienne entre le rendement de la culture (RDT) et dPKMg. Ces relations en RDT et la disponibilité élémentaire fonction du dosage d'[PKMg] et des apport PKMg fit l'objet de maintes études de calibrations, sans pour autant permettre à ce jour la création de grilles de fertilisation véritablement universelles, même au sein d'une même SAU nationale. En effet, localement sur un site ou un sol en particulier, il est très difficile, coûteux, long et onéreux de résoudre simultanément ce type d'équations mitscherlichiennes non linaires à trois variables, dPKMg, [PKMg] et PKMg. De plus, même le cas échéant, l'effet agronomique de telles préconisations PKMg affinées de la sorte seront peu ou pas détectables *in situ* par l'agriculteur, ce type de relation intrinsèque étant trop souvent noyée, en sorte, par l'ensemble des autres variables AGRO et PÉDO. Honnêtement donc, la problématique entourant la fertilisation P, K et Mg revient à préconiser les doses PKMg de remplacement capables de contribuer à maintenir la fertilité du sol telle constatés à un moment donné.

La fertilisation PK spécifique à une culture agronomique est actuellement fondée sur un certain CME-PK (coefficient multiplicatif d'exportation - phosphore/potassium ; *cf.* Comifer 2011, 2007) qui une fois appliqué au rendement agronomique moyen de la parcelle est ces teneurs en P et K estimées permet de calculer une certaine dose hectare PK à apporter. Les recommandation ainsi proposées sont aussi déclinées selon l'*exigence* de la culture en P et K. Or, cette notion d'exigence est redondante par rapport à celle de rendement agronomiques, et donc d'exportation (lire : de la parcelle) de P et K. De plus, la valeur du CME-PK dépend d'une certaine relation RDT : dPKMg empirique, dite ici *mitscherlichienne,* et en principe spécifique à une culture, mais aussi à un type de sol, à une régime hydroclimatique, *etc.*

Or, et encore une fois, ces relations sous formes de courbes de calibration spécifiquement locales n'existent pas pour l'ensemble de ces situations agronomiques particulières. Leurs établissement à partir de données pluriannuelles et/ou multisites étant très onéreux et coûteux (eg. Colomb *et al.* 2007). Enfin, l'existence de deux seuils critiques différents, dits impasse (Ti) et renforcement (Tr), du moins pour le P, est logiquement incohérent ; un seuil, critique d'autant plus, est unique.

Le problème technique lors du calcul des dose hectare PK applicables au culture agronomique est donc tripartite ;

- • redondance des notions d'exigence et de rendement agronomique (RDT) ;
- • absence de courbes empiriques RDT:dPKMg de type Mitscherlich pour l'ensembles des situations agronomiques ;
- • incohérence des doubles seuils critiques Ti (impasse) et Tr (remplacement).

Il en résulte que la fertilisation PK, voire Mg, des grandes cultures demeure à ce jour empiriquement mal calibrée, imprécise et difficile à communiquer.

A noter qu'il ne s'agit pas ici d'un problème expressément liée à l'agriculture de précision cherchant à adapter superficiellement par modulation en temps réel des dose P, K et/ou Mg selon les variations immédiates du terrain, mais plutôt le re - calibrage des grilles de fertilisation PKMg à ce jour trop dépendantes de fonctions de type mitscherlichiennes peu ou pas renseignées. Le problème technique ne concerne pas non plus la sélection de méthodes mathématiques, qui de toutes façons existent déjà pour la plupart, pour établir une corrélation intrinsèque (i.e. endomorphismes) entre les variables AGRO et PÉDO, mais plutôt d'utiliser ce type de corrélations pour redéfinir les états (lire : teneurs) P, K et/ou Mg des sols nécessaire, bien que non suffisants, au plein rendement de la culture.

Par exemple, il existe déjà dans la base de connaissance des technique de fertilisation de précision supposément capable de moduler avec une certaine précision en temps réel apports d'engrais N, P, K et Mg *in situ.* En effet, US 5,668,719 décrit un système de traitement d'un champ intégrant des échantillons de sols prélevés à différents endroits géolocalisés dans le champ ; les échantillons sont par la suite analysés physico - chimiquement et confrontés à des bases de données correspondant à la zone agricole (lire : SAU) en question. Un "programme", informatique à supposer, coupler à une applicateur d'engrais va maintenant commander l'application, modulée en temps réel, selon ces caractéristique *in situ* du champ. Ou encore WO 01/33505 A2 décrit lui appareil commandé par un ordinateur ainsi qu'un procédé pour définir des zones d'un champ dans lesquelles une culture (agronomique) sont particulièrement bien adaptées. Le procédé consiste à effectuer des mesures de télédétection à travers le temps tenant compte de la géographie du terrain (champ), normaliser ces données en les convertissant en un indice végétatif, et comparer (lire: analyser à l'aide de méthodes statistiques multivariées telle que l'ACP) afin d'identifier les groupes de valeurs variables homogènes caractéristiques des diverses zones du terrain (champ) selon leurs potentiels agro - pédologiques. Bien qu'utiles, ces techniques présupposent un outillage et des équipements électroniques complexes peu rentables étant donnés les augmentations de rendements attendus en réponse à de tels apports d'engrais P, K et Mg.

*Solution technique*

Étant donnée le manque d'information empirique concernant l'ensemble des relations mitscherlichiennes pédo-spécifiques entre RDT et [PKMg], d'une part, et d'autre part l'incohérence des notions Ti et Tr, il est avantageux de s'en affranchir lors de la préconisation et du dosage des apports agronomiques d'engrais P, K, voire Mg (PKMg). Or, parce que PKMg augmente la fertilité du sol et le potentiel de rendement du sol, et que dPKMg interagie avec *l'ensemble* des autres variables pédologiques, il est envisageable d'évaluer cette fertilité PKMg à l'aide d'analyses mulitvariées (multidimensionnelles) de cet ensemble des variables pédologiques et/ou agronomiques. Nous sommes donc ici véritablement dans le domaine de l'algèbre linéaire, et non plus dans celui des régressions multi - variées non linéaires auquel appartient l'équation Mitscherlich classique.

La solution technique proposée comprend donc avantageusement une *analyse co-inertielle* (COIA) de variables agronomiques (AGRO) et pédologiques (PÉDO), avantageusement de simples rendements agronomiques en grains ou biomasses de grandes cultures non irriguées, dépendantes et donc représentatives du potentiel de rendement d'un agroclimat spécifique, d'un département, d'un canton, voire d'un îlot ou même une simple parcelles agricole. Ces variables agronomiques (AGRO) sont ainsi jumelées à des données pédologiques (PÉDO) telles que les teneurs du sol en C, P, K, Ca, Mg, argiles, sables et limons, ou encore la CEC (capacité d'échange cationique), le pH, *etc.* (*cf*. Tableau 1). Du coup, et malgré une apparente corrélation a priori peu importante, dite extrinsèque, deux variables, une AGRO (RDT), et l'autre pédologique (PÉDO ; PKMg) peuvent néanmoins être (plus) précisément exprimés l'une en fonction de l'autre. Cela est possible en divisant chacune desdites variables AGRO et PÉDO en question par les valeurs des coordonnées de la première composante principale (CPn) *coinertielle* la mieux (plus) corrélée avec l'un ou l'autre des deux variables, AGRO et PÉDO, considérées. On obtient ainsi ce que nous appelons ici des *pseudo* variables AGRO et PÉDO, somme toute parfaitement commensurables avec les variables AGRO et PÉDO d'origine.

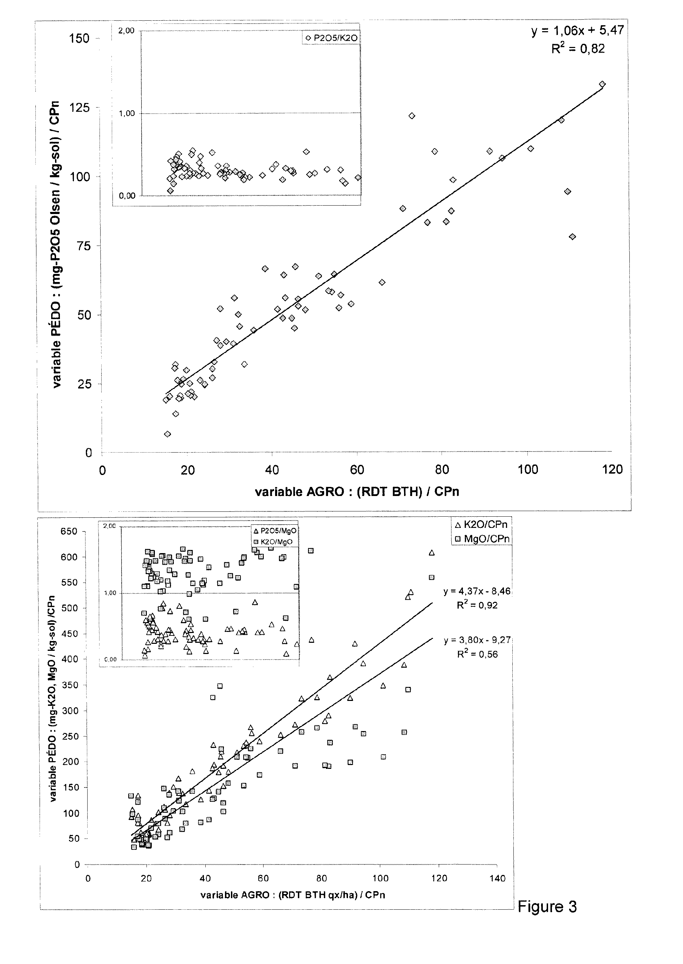

Une fois cet ajustement, de telles *pseudo variables* peuvent maintenant être rapportée graphiquement l'une à l'autre via une courbe dPKMg : RDT (Figures 3, 4 et 5) permettant ainsi d'estimer les valeurs de dPKMg que doivent atteindre les sols si ce niveau de RDT est souhaité. (Rappel : Pour bien réaliser l'invention il est essentiel de garder en tête les notions de **dPKMg, [PKMg]** et **PKMg,** c'est à dire, la disponibilité, la teneur initial du sol sans ou avant l'apport d'engrais P, K et/ou Mg (PKMg). Comme de raison, s'il n'est pas a priori question de PKMg, dPKMg = [PKMg].)

Concrètement, il s'agit d'un procédé de diagnostique de l'état phosphorique et/ou potassique et/ou magnésique de sols arables, et de préconisation des apports d'engrais minéraux P, K et/ou Mg (PKMg) comprenant la mise en relation de *pseudo* variables dites AGRO décrivant le potentiel de rendement de grandes cultures, et des *pseudo* variables dites PÉDO décrivant le caractère physicochimique des sols arables associés aux variables AGRO, comprenant d'une part ;

- l'échantillonnage d'une parcelle et/ou d'un îlot agricole en particulier selon les règles de l'art afin d'obtenir un échantillon de terre représentatif de la parcelle / îlot agricole,
- ledit échantillon est analysé physico - chimiquement de manière à établir la ou les valeurs de variables pédologiques (PÉDO) d'intérêts que l'on cherche à corréler, relier en sorte, à une ou des variables agronomiques (AGRO), et d'autre part,
- la compilation préalable d'un jeu de données comprenant des valeurs observées pour les variables AGRO et PÉDO provenant d'un cadre géographique (cartographique) auquel appartiennent les susdits îlots et/ou parcelles agricoles décrivant donc le potentiel de rendement et des caractéristiques physico-chimiques et/ou biologiques des sols d'un territoire, avantageusement une superficie agricole utile (SAU),
- une analyse multivariée, dite aussi parfois multidimensionnelle, de ces données agronomiques (AGRO) et pédologiques (PÉDO), et donc l'obtention d'au moins les deux premières séries de coordonnées des *composantes principales* (CPn) les plus corrélées avec chacune des variables AGRO et PÉDO,
- suite à une *analyse co-inertielle* (COIA) sur la base des deux susdites analyses multidimensionnelle d'AGRO et PÉDO, la mise en relation des valeurs des pseudo variables AGRO et PÉDO se fait par division des valeurs des deux variables AGRO et PÉDO par les coordonnées d'une des *composantes principales* (CPn) issues de cette COIA la plus corrélée avec une ou l'autre des variables AGRO et PÉDO retenues établissant une corrélation *intrinsèque,* avantageusement sous la forme d'une fonction linéaire, entre ces deux *pseudo* variables
- la ou les valeurs des *pseudo* variables PÉDO servent ainsi à définir la ou les valeurs des *pseudo* variables AGRO correspondantes selon la corrélation intrinsèque, avantageusement sous la forme d'une fonction linéaire, reliant les deux *pseudo* variables AGRO et PÉDO en question,

et enfin,

➢ en référence à un potentiel de rendement attendu recherché, la comparaison des valeurs pour les variables AGRO et PÉDO provenant de la parcelle et/ou de l'îlot particuliers aux valeurs AGRO et PÉDO provenant de des susdites corrélations intrinsèques entre lesdites *pseudo* variables correspondant à ce potentiel de rendement attendu.

Les valeurs observées des variables AGRO et PÉDO proviennent d'une SAU d'un territoire national, régional, départemental, voire cantonale, et/ou toute autre élément d'un quelconque cadre hiérarchique cartographique. Le cadre géographique (cartographique) est celui d'un territoire nationale avec un agro - climat tempéré, avantageusement comme celui de la France métropolitaine. Les valeurs observées pour les variables AGRO et PÉDO provenant d'un cadre géographique (cartographique) auquel appartiennent les susdits îlots et/ou parcelles agricoles décrivant donc le potentiel de rendement et des caractéristiques physico-chimiques et/ou biologiques des sols d'un territoire, avantageusement une superficie agricole utile (SAU) sont en nombre suffisant pour permettre une analyse statistique multi - variée, avantageusement ici une *analyse co-inertielle* (COIA), permettant d'obtenir des composantes principales (CPn), soit avantageusement et par exemple ici l'ordre d'une centaine.

L'analyse multi - variée, ou multidimensionnelle, est choisie parmi un groupe de méthodes analytiques dites factorielles comprenant *a priori* les méthodes fondées sur des recherches d'axe principaux, ou *composantes principales* (CPn), telles que les analyses générales de décomposition aux valeurs singulière, les analyses des correspondances et de correspondances multiples (ACM), l'analyse canonique, l'analyse factorielle discriminante (AFD) et, surtout, avantageusement les analyses par composante principales (ACP). Dans un deuxième temps, l'analyse multidimensionnelle de type co-inertielle (COIA) de *k* tableaux, k ici étant égale à 2, permettra de relier ces deux tableaux constitués ici de variables agronomiques AGRO et pédologiques PÉDO. Lors de l'analyse *co-inertielle* (COIA) de k tableaux, tels que les deux tableaux constitués ici de variables agronomiques AGRO, d'une part, et d'autre part de variables pédologiques PÉDO ; généralement et avantageusement, k est donc égale ou supérieur à 2.

Les variables AGRO sont choisies parmi un groupe non exclusif comprenant les rendements agronomiques de grandes cultures, non irriguées, prédominantes et donc représentatives du potentiel de rendement du territoire en question, telles que les cultures céréalières d'hiver et de printemps, les cultures oléagineuses d'hivers et de printemps, les cultures protéagineuses d'hiver et de printemps. Les variables PÉDO sont choisies parmi un groupe non exclusif comprenant le pH, le carbone organique, la capacité d'échange cationique (CEC), les teneurs élémentaires en $N_{organique}$ et $P_{organique}$, en P, K, Ca, Mg, Fe et autre oligo-éléments, le % de saturation cationique de la CEC, la granulométrie du sol, y compris les proportions d'argile, de limons et sables, fins et grossiers, et/ou de toute autre variable descriptive de la nature et/ou du fonctionnement, biologique, physico-chimique ou mécanique, du sol. Cela dit, es variables PÉDO comprennent nécessairement au moins les teneurs des sols en $P_2O_5$, $K_2O$ et MgO. Plus particulièrement, les teneurs des sols en $P_2O_5$ sont déterminées selon les méthodes dites Dyer, Joret-Hébert (JH), Olsen, ou comprenant la mesures de la phyto-disponibilité du P du sol (dP).

*Avantages apportés et activité inventive*

L'approche est universelle, du moins pour les sols ou types d'agro-pédo-climats (APC) d'où proviennent les échantillons d'analyses (variables) AGRO et PÉDO. Elle permet d'exprimer simplement les teneurs du sol en P, K et Mg nécessaires, mais non suffisantes, afin d'atteindre un rendement quelconque, potentiel et/ou espéré.

L'invention permet de mettre fin à deux situation incongrues. Premièrement, si l'approche mitscherlichienne devait être appliquée, elle nécessiterait des données multi-sites voire pluriannuelles. Or, ces données devront être normalisées, généralement sur une base 100 ; les préconisations P, K et/ou Mg seront donc faites en référence à une rendement maximal et relatif égale à 100 (ou 1,00). Or, l'utilisateur de raisonne pas en terme relatif ; il attend un rendement pondéral et chiffré mais pas nécessairement maximal, relatif, voire même optimal. Deuxièmement, préconiser les quantité d'engrais apporter à titre de remplacement des exportations de P, K et Mg ne tient pas compte de l'état initiale (actuel) du sol ; au mieux, un sol appauvri le restera, et *in contrario* un sol sursaturé le restera aussi.

Notons que même si l'obtention de composantes principales (CPn) par analyses multi - variées, telle que par exemple l'ACP, est très bien connue (eg. US 2009/0254314 A1 et US 2005/0060103 A1), son application pour le calibrage de la préconisation des apports d'engrais P, K et/ou Mg est inédite, et pour cause. En effet, de telles préconisations ont toujours été établies sur la base de courbes de réponse des rendements agronomiques aux disponibilités de P, K et Mg, mais surtout P, dans les sols (*cf.* supra État de la technique; eg. Urrisi et al. 1998, etc.). Notons en ce sens que les hommes du métiers en US 2009/0254314 A1 et US 2005/0060103 A1ne sont pas des agronomes, et que même en US 5,668,719 et WO 01/33505 A2 l'agronome cherche surtout et comme d'habitude à établir des zones intra - parcellaires (ou intra - îlot) à cibler plus précisément, *i.e.* à réaliser une agriculture dite de précision.

## BRÈVE DESCRIPTION DES DESSINS ET FIGURES

**Figure 1:** Représentation schématique de l'activité inventive. En *haut,* une réponse *mitscherlichienne* des rendements agronomiques, relatifs et normalisés puisque les observations sont nécessairement multi - sites et pluriannuelles pour être suffisamment nombreuses, à la progression de dPKMg, la disponibilité de PKMg sans le sol. Cette disponibilité est la somme des teneurs initialement présentes plus les apports externes, généralement sous formes d'engrais PKMg, ou encore d'amendements et/ou de fumiers, lisiers, *etc.* Une fois que dPKMg atteint un certain seuil (critique ; cPKMg), le rendement relatif plafonne ; cPKMg peut ainsi servir à ajuster les préconisations d'engrais PKMg à apporter. Selon le type de sol, cPKMg variera selon la position du point d'inflexion, ou plus exactement d'un point légèrement en retrait, eg. 95%, du rendement relatif maximum. En *bas,* une réponse plus strictement linéaire selon l'invention. Les axes X et Y comprennent les valeurs de dPKMg et des rendements agronomiques pondéreux *ajustés* selon les coordonnées coinertiaux AGRO - PÉDO. Il n'est plus véritablement question de cPKMg mais seulement de iPKMg, *i.e.* une valeur de dPKMg assurant le *maintient* du niveau de fertilité PKMg du sol de tel sorte à ce que le rendement attendu correspondant ne sera pas compromis par une quelconque carence en PKMg.

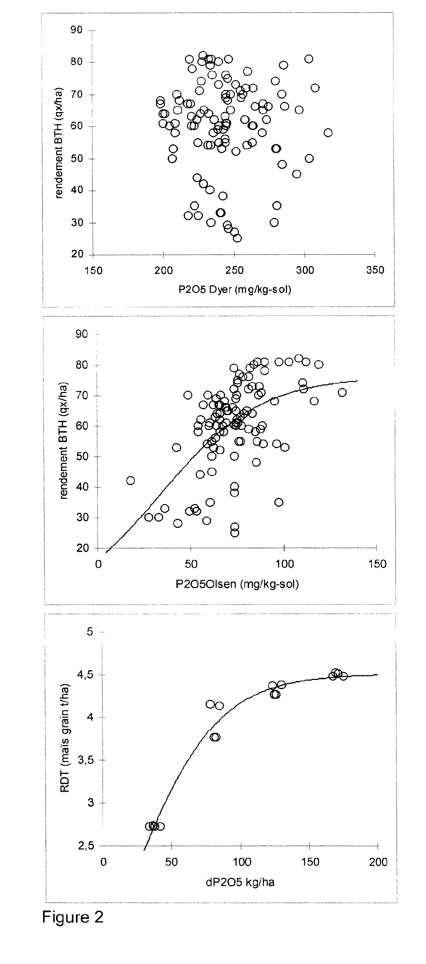

**Figure 2 :** Illustration d'un aspect du problème technique. In situ et dans l'ensemble, les corrélations, quelconque y compris mitscherlichienne, entre le rendement d'une culture agronomique (RDT) et la disponibilité du P dans le sol, par exemple ici selon Dyer ou Olsen, sont a priori très peu utiles à titre de diagnostiques. **(Haut)** Ensemble des 107 points variables (*cf.* Tableau 2) RDT (blé tendre d'hiver) : $P_2O_{5Dyer}$. **(Milieu)** idem, mais par rapport à $P_2O_{5Olsen}$. **(Bas)** Points variables RDT P2O5Olsen selon Urrisi et al,. 1998. Ce type de relation *mitscherlichienne* bien précise est artificielle en ce sens qu'elle nécessite des conditions de culture localement homogènes, et qu'elle n'englobe une gamme de différentiels RDT somme toute limitée de l'ordre de 50% ; une véritable relation mitscherlichienne avec cP etc. (*cf.* Figure 1) nécessitera une gamme bien plus étendue de l'ordre de 300 à 500% au moins. Pour preuve, le $R^2$ de la relation Mitscherlich selon Urrisi et al. 1998 est ici de 97%, tandis que celui d'une simple relation logarithmique est de 94%.

**Figure 3 :** *(haut)* Mise en relation *intrinsèque* des valeurs de deux *pseudo variables* PÉDO et AGRO, les teneurs des sols en $P_2O_5$ Olsen (mg/kg$_{sol}$) et rendements (qx/ha) de blé tendre d'hiver (BTH), respectivement ; celles-ci intègrent donc la division des points variables AGRO et PÉDO correspondantes par les coordonnées de CPn (*cf.* Tableau 2), i.e. la composante principale la mieux corrélées avec l'une ou l'autre de ces variables, soit ici CP-1-x avec la variables AGRO RDT BTH (*i.e.* le rendement du blé tendre d'hiver. En abîme, les ratios $P_2O_5$ : $K_2O$ correspondant à chacun des ces points variables PÉDO : AGRO ainsi ajustés selon CPn. *(bas) Idem,* mais cette fois-ci avec les teneurs des sols en $K_2O$ et MgO (mg/kg$_{sol}$ ; solution d'acétate d'ammonium 1 mol/L à pH=7 (norme NF X31-108)).

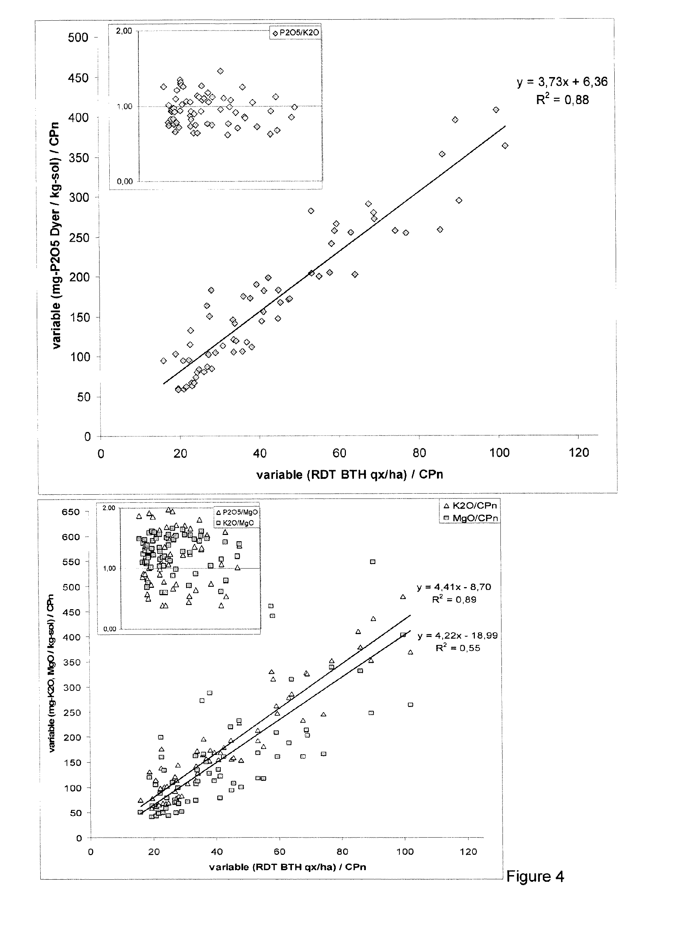

**Figure 4 :** (*haut*) Mise en relation *intrinsèque* des valeurs de deux *pseudo variables* PÉDO et AGRO, les teneurs des sols en $P_2O_5$ Dyer (mg/kg$_{sol}$) et rendements (qx/ha) de blé tendre d'hiver (BTH), respectivement ; celles-ci intègrent donc la division des points variables AGRO et PÉDO correspondantes par les coordonnées de CPn, *i.e.* la composante principale la mieux corrélées avec l'une ou l'autre de ces variables, soit ici CP-1-x avec la variables AGRO RDT BTH (*i.e.* le rendement du blé tendre d'hiver. En abîme, les ratios $P_2O_5$ : $K_2O$ correspondant à chacun des ces points variables PÉDO : AGRO ainsi ajustés selon CPn. (*bas) Idem,* mais cette fois-ci avec les teneurs des sols en $K_2O$ et MgO (mg/kg$_{sol}$ ; solution d'acétate d'ammonium 1 mol/L à pH=7 (norme NF X31-108)).

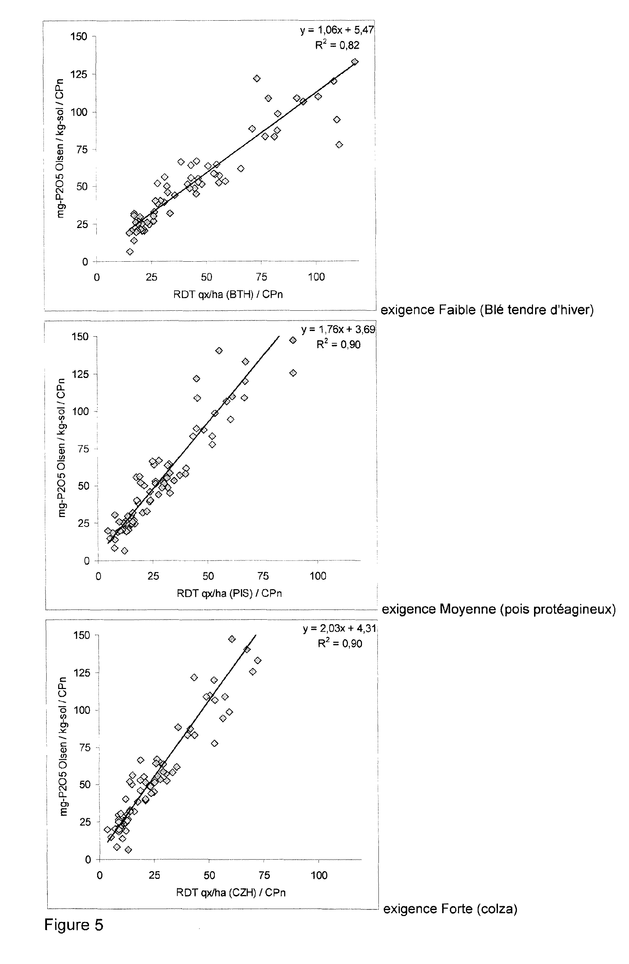

**Figure 5 :** Mise en relation *intrinsèque* des valeurs de deux *pseudo* variables PÉDO et AGRO, les teneurs des sols en $P_2O_5$ Olsen (mg/kg$_{sol}$) et rendements (qx/ha) de blé tendre d'hiver (BTH), de Fabaceae protéagineuse (PIS) et de colza d'hiver (CZH) une fois celles-ci corrigées (divisées) par CPn, *i.e.* les coordonnées de ces points variables PÉDO : AGRO sur les cette axe CPn. Ces trois types de cultures agronomiques sont dites, au sens de l'état de la technique, faiblement, moyennent et fortement exigeantes en phosphore. En ce sens, à noter une progression des pentes $P_2O_5$ : RDT de d'approximativement 1 à 2 selon la dite exigence de la culture.

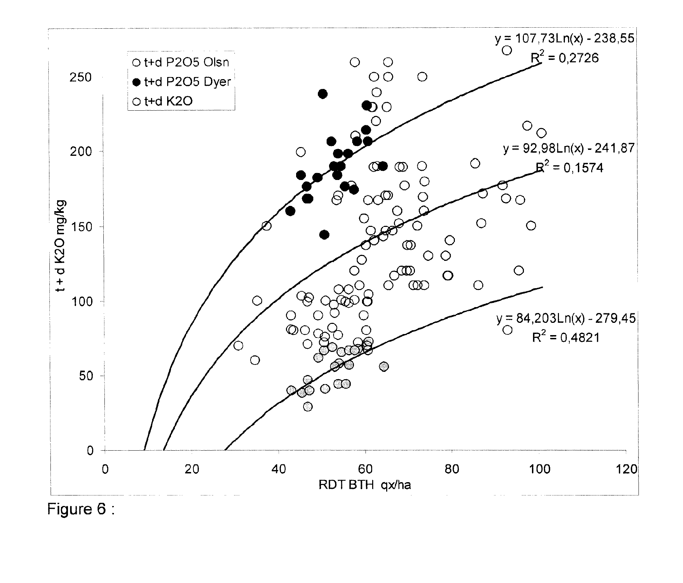

**Figure 6 :** Progression des besoins en $P_2O_5$ selon Dyer et Olsen ainsi qu'en $K_2O$ échangeable selon les rendements de blé tendre d'hiver (BTH ; qx de grain / hectare) lors d'une étude de calibration (Alsace, France, récolte 2012) d'une courbe de réponse du BTH à divers taux de fertilisation P et K en présence de divers teneurs P et K des sols. Les données pour les courbes K et P Dyer et Olsen sont au Tableau 4 ; différentes préconisations obtenues à partir de ces courbes particulière au site alsacien par rapport à celles obtenues à l'aide des courbes plus universelles aux Figures 2 et 3 sont présentées au Tableaux 6 et 7.

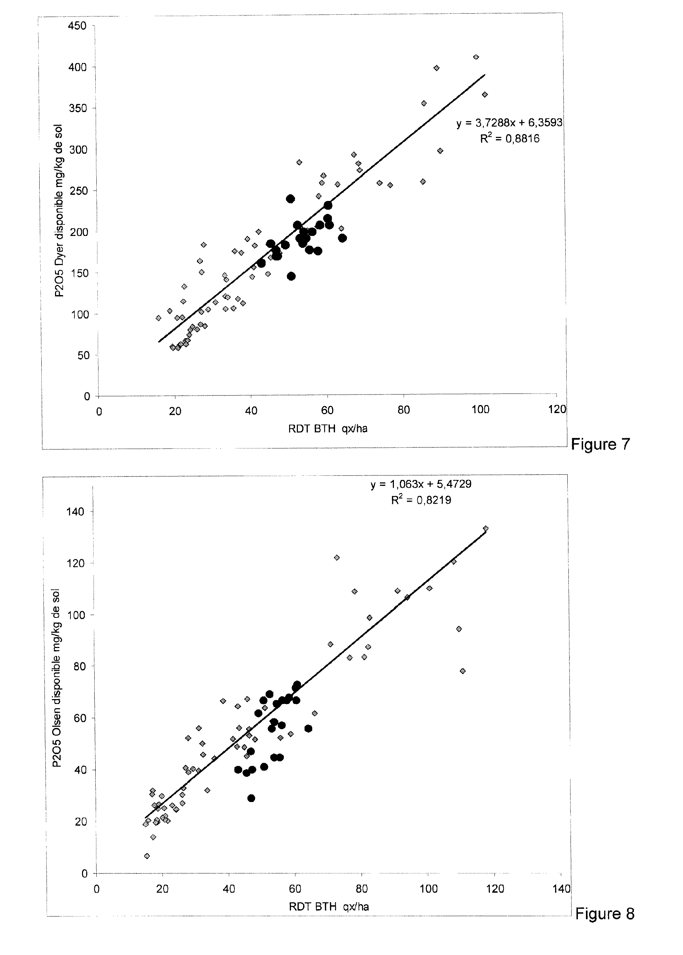

**Figure 7 :** Superposition des points variables $P_2O_5$ Olsen (haut ; mg/kg de sol) fonction des rendements (RDT) attendus de blé tendre d'hiver (BTH) selon la présente invention (petits losanges gris ; *cf.* Figure 3) ou dudit essai de calibration sur un sol Alsacien en particulier (cercles sombres). Les valeurs de $P_2O_5$ sont les sommes des teneurs du sol plus les apports pondéreux d'engrais en équivalents $P_2O_5$ intégrés sur

20 cm de profondeur à une densité apparente de 1,11 g/cm$^3$.

**Figure 8 :** Superposition des points variables P$_2$O$_5$ Dyer (haut ; mg/kg de sol) fonction des rendements (RDT) attendus de blé tendre d'hiver (BTH) selon la présente invention (petits losanges gris ; *cf.* Figure 4) ou dudit essai de calibration sur un sol Alsacien en particulier (cercles sombres). Les valeurs de P$_2$O$_5$ sont les sommes des teneurs du sol plus les apports pondéreux d'engrais en équivalents P$_2$O$_5$ intégrés sur 20 cm de profondeur à une densité apparente de 1,11 g/cm$^3$.

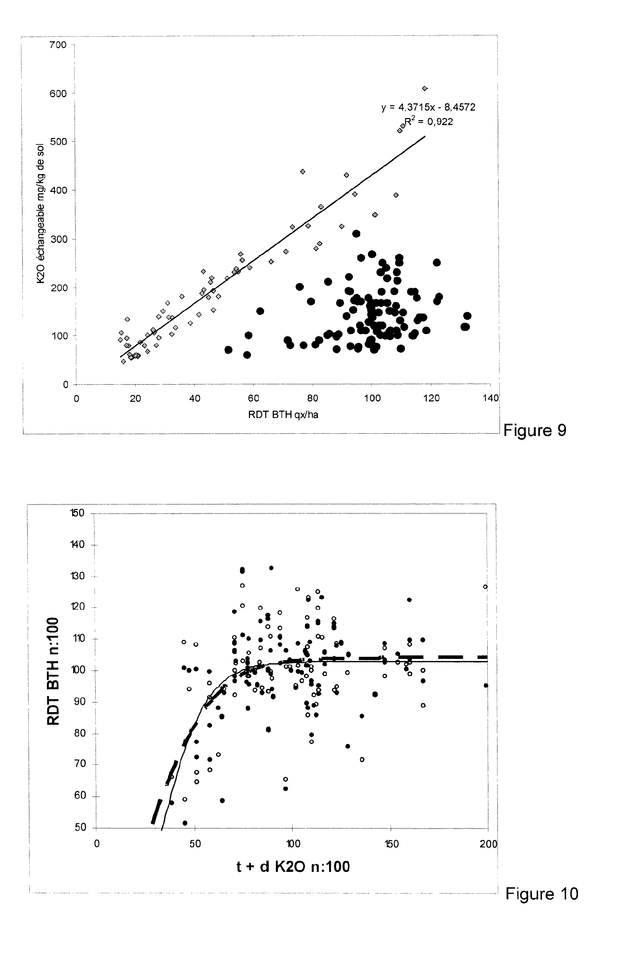

**Figure 9 :** Superposition des points variables K$_2$O (bas ; mg/kg de sols) échangeables fonction des rendements (RDT) attendus de blé tendre d'hiver (BTH) selon la présente invention (petits losanges gris) ou dudit essai de calibration sur un sol Alsacien en particulier (cercles sombres). Les valeurs de K$_2$O sont les sommes des teneurs du sol plus les apports pondéreux d'engrais en équivalents K$_2$O intégrés sur 20 cm de profondeur à une densité apparente de 1,11 g/cm$^3$.

**Figure 10 :** Courbe de réponse explicite de type Mitscherlich des rendements de blé tendre d'hiver (RDT BTH, qx/ha ; trait plein) et matière sèches des parties aériennes (MSPA, t/ha ; pointillé) provenant de différents sites récoltés en Alsace de 2008 à 2013 (normalisés sur une base 100) fonction des disponibilités dans le sol du K$_2$O échangeable elle aussi normalisée sur base 100 (n:100 ; les données sont au Tableau 5). Par disponibilité je veux dire ici la somme de la teneur du sol plus l'apport pondéral d'engrais en équivalents K$_2$O intégrés sur 20 cm de profondeur à une densité apparente de 1,11 g/cm$^3$.

## MODE DE RÉALISATION PRÉFÉRÉ DE L'INVENTION

Bien que l'invention peut être réalisée à l'aide de diverses méthodes d'analyses statistiques multivariées, dite aussi multidimensionnelles, l'analyse co-inertielle est préférable. Selon Dray et *al.* (1997), Dolédec et Chessel (1994), Chessel et Hanafi (1996) et Chessel et Mercier 1993, l'analyse co-inertielle (COIA) consiste en une méthode d'analyse de données couplant K tableaux *m*\**n*. L'objectif est de décrire la structure commune de ces k tableaux portant sur les mêmes unités (descripteurs) statistiques, soit ici des sols arables ; k peut être égale ou supérieur à 2. L'COIA permet d'intégrer la contribution d'au moins deux types de variables dont les structures statistiques sont foncièrement différentes. Par exemple, les données climatiques correspondant à la dispersion d'espèces animales sont foncièrement différentes des données phénotypiques décrivant .ces mêmes espèces animales (Chessel et Hanafi 1996, Dray *et al.* 2003, Dolédec et Chessel 1994).

Il est néanmoins et comme de raisons utile en écologie de lier statistiquement la variabilité de ces deux types de données. *Idem* en agronomie ; les données agronomiques sur les rendements (AGRO ; eg. qx de blé / ha), sont foncièrement différentes des données pédologiques (PÉDO ; eg. mg-P$_2$O$_5$ / kg de sol).

Les deux jeux de données ici consiste en un tableau de 107 observations comportant 87 moyennes départementales et 20 régionales, hors Corse et Île de France, pour diverses variables agronomiques (AGRO), essentiellement les rendements moyen en grains de 13 grandes cultures les plus importantes dans ces départements, et les moyennes départementales et régionales des 20 variables pédologiques (PÉDO) ; voir leurs descriptions sommaires au Tableau 1.

Les variables AGRO proviennent du service statistique du ministère français de l'agriculture, dit Agreste (http://agreste.agriculture.gouv.fr/) pour l'année 2011, tandis que les variables PÉDO proviennent elles de la base de donnée des analyses de terre, dite BDAT, du Groupement d'intérêt scientifique pour les sol (Gissol ; http://bdat.gissol.fr/geosol/index.php) pour la période 2005-2009.

Concrètement, COIA comportant ici K = 2 groupes de mesures variables dites AGRO et PÉDO est effectuée à l'aide du logiciel dit ADE4 (Dray *et al.* 2003 ; Thiolouse et Dray 2007 ; http://pbil.univ-lyon1.fr/ade4/). Cette analyse implique deux *analyses par composantes principales* (ACP), l'une pour les variables PÉDO et l'autre pour les variables AGRO ; COIA peut par la suite être effectuée à l'aide de l'interface graphique pour ADE4 dite ade4TkGUI (Thiolouse et Dray 2007 ; http://pbil.univ-lyon1.fr/ade4TkGUI/). COIA va ainsi, générer une série de coordonnées X et Y, dans les faits les premières et deuxième composantes principales, CP$_1$ et CP$_2$, pour ces deux groupes de variables AGRO et PÉDO (Tableau 2).

Il est ainsi possible de rapporter les variables PÉDO en question, soit ici et plus particulièrement les teneurs des sols en phosphore inorganique ([Pi], en mg-P$_2$O$_5$/kg-sol selon Olsen, JH ou Dyer ; voir Fardeau *et al.* 1988 et/ou le site du Gissol http://bdat.gissol.fr/geosol/index.php pour une comparaison des ces méthodes bien connues en France et ailleurs), potassium ([K]) et magnésium ([Mg]) inorganique, aux variables AGRO telles que les susdits rendements en grains des principales culture agronomiques.

Ainsi, des corrélations *intrinsèques* fortes vont apparaître au lieu de simples corrélations *extrinsèques* faibles entre les variables AGRO et PÉDO sans COIA (Figure 1). Ces corrélations intrinsèques qui servent ici établir les teneurs [PKMg]$_{sol}$ minimales à respecter si le rendement souhaité correspondant doit être réalisable.

Tableau 1 : Variables (VAR) agronomiques (AGRO) et pédologiques (PÉDO)

| NOM | VARIABLE (VAR ; X) | UNITE | MOYENNE FR |
|---|---|---|---|
| **variables agronomiques (AGRO)** | | | |
| BTH | blé tendre d'hier | qx / ha | 60,32 |
| SGL | seigle d'hiver | qx / ha | 45,81 |
| ORH | orge d'hiver | qx / ha | 58,01 |
| ORP | orge de printemps | qx / ha | 42,62 |
| AVH | avoine d'hiver | qx / ha | 40,65 |
| TRT | triticale | qx / ha | 51,36 |
| tCER | total céréales | qx / ha | 62,15 |
| CZH | colza d'hiver | qx / ha | 28,22 |
| TSL | tournesol | qx/ ha | 22,55 |
| OLG | total oliagineux | qx / ha | 26,25 |
| FVL | févrole | qx / ha | 27,57 |
| PIS | pois protéagineux | qx / ha | 35,15 |
| PRT | total protéagineux | qx / ha | 32,96 |
| **variables pédologiques (PÉDO ; Y)** | | | |
| Co | carbone organique | mg/kg de sol | 17,89 |
| Po | phosphore organique | mg/kg de sol | 12,21 |
| $pHK_{Cl}$ | pH du sol (1MKCl) | N/A | 6,02 |
| $PH_{eau}$ | pH du sol (eau) | | |
| dpH | pHeau -phKCl | N/A | 0,81 |
| EC | conductivité éléctrique | dS / m | 0,16 |
| CNA | capacité de neutralisation acide | umol/kg de sol | 15,28 |
| $P_2O_5$Olsen | phosphore inorganique selon Olsen | mg/kg de sol | 73,58 |
| $P_2O_5$JH | phosphore inorganique selon Joret-Hébert | mg/kg de sol | |
| $P_2O_5$Dyer | phosphore inorganique selon Dyer | mg/kg de sol | |
| CEC | Capacité d'échange cationique | $Cmol^+$/kg | 12,58 |
| pCaO | Log (CaO échangeable) | log(mg/kg) | 1,30 |
| $K_2O$ | $K_2O$ échangeable | mg/kg de sol | 262,91 |
| MgO | MgO échangeable | mg/kg de sol | 229,70 |
| $Na_2O$ | $Na_2O$ échangeable | mg/kg de sol | 21,54 |
| FeEDTA | Fer (Fe) extractible avec l'EDTA (chélateur) | ug/kg de sol | 103,40 |
| SAT | Degré de saturation cationique de la CEC | % | 201,96 |
| Argile | proportion d'argile | g/kg de sol | 209,74 |
| SablesG | proportion de sable grossier | g/kg de sol | 218,78 |
| SablesF | proportion de sable fin | g/kg de sol | 141,78 |
| LG | proportion de limons grossiers | g/kg de sol | 195,26 |
| LF | proportion de limons fins | g/kg de sol | 234,22 |
| LFLG | ratio | N/A | 1,45 |

Pour ce faire, il faut procéder comme suit ;

- Choisir une parmi les quatre séries de coordonnées des composantes principales (CPn) X et Y pour les variables AGRO et PÉDO (Tableau 2), la série la plus (la mieux) corrélée avec l'une ou l'autre des variables AGRO et PÉDO (Tableau 1) en question, soit ici et par exemple le rendement agronomique de la culture (RDT) et la teneur en P, Olsen ou Dyer, voire éventuellement et au choix JH ou E (Morel et al. 2009, Deneroy *et al.* 2011) ;

- Diviser (ajuster) ces deux séries de valeurs AGRO et PÉDO par les valeurs absolues desdites coordonnées correspondantes à la susdite composante principale (CPn) multipliées par le coefficient de détermination de cette relation (Tableau 3) ;

- Obtenir ainsi des *pseudo* valeurs pour chacune des observations des variables AGRO (*i.e.* ici et par exemple RDT) et PÉDO (i.e. ici et par exemple P, K ou Mg) (Figures 3, 4 et 5).

Il est ainsi possible de transformer une relation extrinsèque faible en relation intrinsèque forte, tout en respectant la structure de corrélation, la co-inertie en sorte, de l'ensemble du jeux de données.

EP 2 774 467 A1

TABLEAU 2 : Portion du jeu de données ayant servi à l'*analyse coinertielle* (COIA) AGRO : PÉDO. Les données AGRO sont marquées en gris et le données PÉDO sont à leurs droite. Les composante principales (CP$_{1,2}$) selon ces deux types de données (X, AGRO ; Y, PÉDO) issues de la COIA sont aussi indiquées ; elles servirent à établir les courbes au Figures 3, 4 et 5. Il s'agit ici des données comprenant P$_2$O$_5$-Olsen. (Nb. Le jeux de données comprend en tout 107 observations, dont un quarantaine sont représentées ici.)

| REGN/DEPT/FR | CP1-x | CP2-x | CP1-y | CP2-y | BTH | SGL | ORH | ORP | AVH | TRT | tCER | CZH | TSL | OLG | FVL | PIS | PRT | Co | Po | pHKcl | dpH | EC | CNA | P2O5 | CEC | pCaO | K2O | MgO | Na2O | FeEDTA | SAT | Argile | SG | SF | LG | LF | LFLG |
|---|---|---|---|---|---|---|---|---|---|---|---|---|---|---|---|---|---|---|---|---|---|---|---|---|---|---|---|---|---|---|---|---|---|---|---|---|---|
| 18 - Cher | 0,01 | -0,30 | 0,75 | -0,34 | 62 | 54 | 67 | 43 | 40 | 45 | 65 | 28 | 20 | 26 | 28 | 35 | 32 | 18,67 | 12,27 | 6,15 | 0,84 | 0,12 | 15,09 | 56 | 12,5 | 1,3 | 294 | 219 | 13 | 115 | 197 | 211 | 196 | 161 | 207 | 226 | 1,36 |
| 73 - Savoie | -0,02 | -0,62 | -0,61 | 0,73 | 62 | 50 | 60 | 45 | 40 | 55 | 85 | 28 | 25 | 27 | 15 | 30 | 28 | 16,91 | 13,52 | 6,03 | 0,72 | 0,22 | 9,56 | 75 | 12,0 | 1,2 | 250 | 161 | 12 | 138 | 160 | 211 | 163 | 134 | 242 | 250 | 1,21 |
| 74 - Haute-Savoie | -0,04 | -0,32 | 0,22 | 0,94 | 60 | 40 | 60 | 40 | 37 | 60 | 66 | 29 | 25 | 28 | 20 | 35 | 33 | 15,48 | 12,79 | 6,03 | 0,71 | 0,33 | 9,67 | 60 | 11,9 | 1,4 | 236 | 146 | 12 | 111 | 190 | 191 | 245 | 143 | 197 | 226 | 1,34 |
| 21 - Côte-d'Or | -0,06 | -0,84 | 2,43 | -5,86 | 65 | 51 | 65 | 44 | 34 | 47 | 62 | 29 | 26 | 28 | 20 | 38 | 36 | 17,10 | 7,86 | 6,62 | 0,82 | 0,53 | 39,96 | 70 | 14,2 | 1,9 | 316 | 528 | 15 | 49 | 296 | 235 | 167 | 167 | 179 | 234 | 1,65 |
| 36 - Indre | 0,12 | -0,42 | 0,91 | 0,43 | 62 | 50 | 70 | 44 | 42 | 47 | 63 | 28 | 23 | 27 | 17 | 35 | 31 | 18,63 | 11,39 | 6,07 | 0,98 | 0,10 | 16,68 | 56 | 11,9 | 1,4 | 278 | 240 | 23 | 104 | 186 | 212 | 253 | 138 | 173 | 227 | 1,54 |
| 23 - Creuse | 0,11 | 0,34 | -2,39 | 3,60 | 56 | 52 | 62 | 38 | 44 | 52 | 54 | 27 | 25 | 26 | 32 | 31 | 30 | 16,23 | 15,65 | 5,61 | 0,84 | 0,10 | 6,39 | 64 | 10,3 | 1,2 | 211 | 135 | 39 | 147 | 153 | 168 | 211 | 147 | 247 | 227 | 1,11 |
| 25 - Doubs | -0,13 | 0,38 | 1,35 | -6,37 | 60 | 55 | 53 | 30 | 48 | 59 | 57 | 28 | 24 | 27 | 30 | 32 | 29 | 16,24 | 7,39 | 6,76 | 0,92 | 0,09 | 35,99 | 89 | 15,3 | 2,0 | 332 | 476 | 21 | 43 | 333 | 246 | 199 | 154 | 162 | 237 | 1,66 |
| 69 - Rhône | 0,15 | 0,53 | -1,49 | 3,56 | 55 | 50 | 58 | 30 | 45 | 54 | 64 | 27 | 26 | 27 | 20 | 34 | 33 | 19,89 | 16,37 | 5,48 | 0,83 | 0,61 | 6,71 | 86 | 11,3 | 0,7 | 227 | 152 | 16 | 182 | 142 | 174 | 229 | 140 | 223 | 233 | 1,26 |
| 79 - Deux-Sèvres | -0,22 | -0,29 | 0,52 | -1,07 | 63 | 46 | 62 | 45 | 46 | 50 | 60 | 31 | 19 | 25 | 24 | 38 | 35 | 19,14 | 11,37 | 6,00 | 0,95 | 0,08 | 19,10 | 77 | 13,7 | 1,4 | 271 | 286 | 26 | 100 | 211 | 231 | 198 | 140 | 184 | 245 | 1,68 |
| 26 - Région Bourgogne | 0,27 | -0,53 | 1,29 | -1,94 | 64 | 50 | 65 | 43 | 35 | 46 | 62 | 28 | 23 | 27 | 23 | 34 | 33 | 16,51 | 10,52 | 6,28 | 0,48 | 0,22 | 21,95 | 64 | 12,3 | 1,6 | 277 | 309 | 15 | 89 | 249 | 221 | 199 | 152 | 193 | 234 | 1,49 |
| 47 - Lot-et-Garonne | 0,28 | -1,74 | 0,92 | -2,81 | 64 | 40 | 65 | 40 | 44 | 55 | 72 | 36 | 26 | 27 | 18 | 30 | 22 | 17,10 | 9,75 | 6,40 | 0,93 | 0,21 | 22,50 | 83 | 13,5 | 1,8 | 284 | 312 | 22 | 64 | 233 | 232 | 219 | 140 | 162 | 244 | 1,67 |
| 63 - Puy-de-Dôme | 0,27 | -0,39 | -0,39 | 0,48 | 61 | 45 | 57 | 33 | 37 | 52 | 62 | 29 | 29 | 29 | 25 | 32 | 32 | 16,58 | 12,34 | 6,22 | 0,04 | 0,21 | 21,31 | 75 | 12,5 | 1,2 | 271 | 355 | 42 | 128 | 187 | 193 | 219 | 149 | 219 | 226 | 1,36 |
| 38 - Isère | -0,25 | 0,66 | -1,00 | 1,43 | 55 | 44 | 59 | 35 | 45 | 50 | 52 | 28 | 25 | 27 | 25 | 42 | 41 | 16,59 | 13,94 | 5,92 | 0,78 | 0,44 | 9,47 | 77 | 11,2 | 1,2 | 223 | 162 | 13 | 130 | 179 | 188 | 220 | 145 | 223 | 227 | 1,26 |
| 70 - Haute-Saône | -0,34 | -0,89 | 2,34 | -3,16 | 67 | 56 | 63 | 47 | 37 | 58 | 64 | 29 | 22 | 27 | 30 | 30 | 29 | 18,65 | 9,41 | 6,36 | 0,56 | 0,15 | 23,20 | 66 | 13,6 | 1,7 | 304 | 294 | 13 | 60 | 256 | 247 | 163 | 139 | 192 | 256 | 1,66 |
| 54 - Région Poitou-Charentes | -0,33 | -0,18 | 1,47 | -1,27 | 62 | 48 | 61 | 47 | 45 | 46 | 60 | 30 | 22 | 25 | 27 | 39 | 37 | 18,55 | 10,66 | 6,16 | 0,78 | 0,13 | 19,34 | 66 | 13,5 | 1,5 | 283 | 270 | 21 | 77 | 222 | 232 | 218 | 133 | 176 | 241 | 1,64 |
| 43 - Région Franche-Comté | -0,41 | -0,63 | 3,10 | -4,30 | 67 | 55 | 59 | 45 | 42 | 58 | 63 | 29 | 24 | 27 | 30 | 30 | 29 | 18,61 | 8,29 | 6,49 | 0,47 | 0,10 | 30,73 | 63 | 14,9 | 1,9 | 322 | 405 | 16 | 52 | 288 | 243 | 193 | 141 | 168 | 249 | 1,76 |
| 71 - Saône-et-Loire | -0,44 | -0,83 | 0,03 | 0,72 | 70 | 45 | 63 | 44 | 42 | 44 | 67 | 30 | 27 | 29 | 20 | 40 | 35 | 16,81 | 12,62 | 5,86 | 0,84 | 0,12 | 12,64 | 60 | 11,4 | 1,3 | 252 | 180 | 16 | 122 | 202 | 207 | 209 | 141 | 208 | 235 | 1,32 |
| 86 - Vienne | -0,39 | -0,29 | 1,25 | -1,07 | 61 | 50 | 63 | 47 | 45 | 42 | 61 | 29 | 24 | 27 | 30 | 38 | 35 | 17,36 | 10,55 | 6,04 | 0,90 | 0,27 | 15,38 | 61 | 13,6 | 1,5 | 271 | 217 | 16 | 69 | 204 | 229 | 210 | 141 | 185 | 232 | 1,52 |
| 89 - Yonne | 0,42 | -0,62 | 1,75 | -4,08 | 64 | 50 | 66 | 42 | 31 | 45 | 62 | 28 | 21 | 27 | 25 | 34 | 33 | 15,46 | 8,74 | 6,67 | 0,79 | 0,24 | 27,08 | 66 | 12,3 | 1,8 | 285 | 377 | 15 | 64 | 281 | 230 | 191 | 159 | 173 | 237 | 1,74 |
| 49 - Maine-et-Loire | -0,44 | 0,71 | -2,01 | 2,39 | 65 | 49 | 62 | 35 | 52 | 50 | 65 | 27 | 24 | 25 | 25 | 36 | 33 | 17,22 | 13,94 | 5,65 | 0,86 | 0,12 | 8,08 | 75 | 10,7 | 1,1 | 237 | 153 | 32 | 129 | 170 | 186 | 207 | 145 | 234 | 228 | 1,14 |
| 85 - Vendée | -0,44 | 0,28 | -0,85 | 2,33 | 64 | 51 | 56 | 39 | 45 | 48 | 68 | 29 | 22 | 24 | 29 | 40 | 36 | 18,30 | 13,82 | 5,63 | 0,96 | 0,27 | 9,29 | 79 | 12,2 | 0,9 | 244 | 181 | 25 | 104 | 155 | 192 | 285 | 137 | 174 | 215 | 1,49 |
| 72 - Sarthe | -0,52 | 0,78 | -1,16 | 5,69 | 66 | 63 | 57 | 39 | 44 | 54 | 67 | 24 | 25 | 24 | 22 | 38 | 35 | 22,33 | 17,41 | 5,21 | 0,90 | 0,08 | 4,64 | 69 | 11,1 | 0,1 | 233 | 157 | 25 | 188 | 111 | 178 | 255 | 124 | 203 | 240 | 1,33 |
| 17 - Charente-Maritime | -0,56 | -0,09 | 1,15 | -0,32 | 63 | 50 | 57 | 50 | 45 | 50 | 61 | 30 | 21 | 24 | 25 | 41 | 40 | 18,75 | 10,75 | 6,34 | 0,42 | 0,08 | 20,88 | 63 | 12,0 | 1,6 | 285 | 296 | 37 | 86 | 240 | 220 | 238 | 131 | 182 | 233 | 1,55 |
| 67 - Bas-Rhin | -0,66 | -1,98 | 1,07 | -3,88 | 73 | 40 | 64 | 42 | 40 | 52 | 81 | 34 | 25 | 32 | 27 | 30 | 29 | 17,65 | 9,43 | 6,53 | 0,72 | 0,16 | 26,10 | 84 | 14,8 | 2,0 | 314 | 358 | 17 | 73 | 263 | 241 | 189 | 143 | 186 | 236 | 1,44 |
| 82 - Région Rhône-Alpes | 0,54 | 0,41 | -0,84 | 1,90 | 60 | 41 | 58 | 34 | 39 | 51 | 65 | 27 | 24 | 26 | 18 | 35 | 33 | 17,98 | 14,35 | 5,80 | 0,78 | 0,27 | 8,85 | 75 | 11,6 | 1,0 | 235 | 165 | 15 | 140 | 166 | 190 | 221 | 143 | 215 | 232 | 1,29 |
| 16 - Charente | 0,56 | -0,47 | 2,33 | -2,32 | 60 | 48 | 61 | 39 | 45 | 45 | 55 | 31 | 23 | 26 | 25 | 31 | 30 | 19,03 | 9,99 | 6,13 | 0,97 | 0,09 | 22,27 | 67 | 14,8 | 1,6 | 308 | 283 | 22 | 51 | 234 | 250 | 220 | 121 | 153 | 258 | 1,85 |
| 39 - Jura | -0,70 | -0,61 | 4,68 | -4,37 | 70 | 55 | 58 | 52 | 45 | 55 | 65 | 28 | 27 | 27 | 30 | 30 | 30 | 21,04 | 8,01 | 6,29 | 0,82 | 0,07 | 38,41 | 49 | 16,0 | 2,0 | 334 | 539 | 15 | 50 | 253 | 238 | 239 | 131 | 124 | 250 | 2,17 |
| 90 - Territoire-de-Belfort | 0,67 | -2,25 | 2,15 | -3,95 | 67 | 56 | 63 | 47 | 40 | 58 | 66 | 29 | 22 | 29 | 30 | 34 | 30 | 19,15 | 8,03 | 6,83 | 0,96 | 0,11 | 19,60 | 57 | 14,9 | 1,9 | 318 | 207 | 12 | 55 | 359 | 243 | 151 | 130 | 226 | 251 | 1,33 |
| 52 - Région Pays de la Loire | -0,67 | 0,60 | -1,43 | 3,28 | 66 | 54 | 60 | 36 | 51 | 53 | 66 | 27 | 24 | 25 | 25 | 37 | 34 | 18,55 | 15,11 | 5,56 | 0,86 | 0,20 | 7,19 | 73 | 11,3 | 0,7 | 236 | 156 | 26 | 141 | 145 | 183 | 238 | 141 | 212 | 226 | 1,26 |
| 53 - Mayenne | -0,75 | 0,21 | -1,24 | 2,73 | 69 | 46 | 59 | 30 | 50 | 57 | 67 | 29 | 25 | 28 | 21 | 38 | 35 | 17,47 | 15,27 | 5,75 | 0,72 | 0,13 | 7,12 | 75 | 11,7 | 0,6 | 237 | 142 | 23 | 140 | 143 | 193 | 217 | 138 | 216 | 235 | 1,33 |
| 74 - Région Limousin | 0,64 | 0,94 | -1,34 | 3,26 | 55 | 45 | 60 | 34 | 43 | 51 | 53 | 26 | 23 | 24 | 31 | 31 | 29 | 17,45 | 15,02 | 5,71 | 0,77 | 0,17 | 7,29 | 62 | 11,0 | 0,9 | 227 | 147 | 34 | 140 | 151 | 177 | 218 | 142 | 231 | 233 | 1,24 |
| 19 - Corrèze | 0,64 | 0,65 | -0,11 | 0,38 | 53 | 40 | 58 | 32 | 40 | 51 | 53 | 28 | 25 | 25 | 30 | 35 | 31 | 17,15 | 12,61 | 6,28 | 0,59 | 0,16 | 10,77 | 63 | 12,8 | 1,5 | 248 | 155 | 22 | 127 | 174 | 216 | 150 | 141 | 247 | 246 | 1,17 |
| 40 - Landes | 0,65 | 0,55 | -1,15 | 5,23 | 53 | 43 | 58 | 40 | 34 | 50 | 88 | 24 | 25 | 25 | 20 | 30 | 28 | 24,95 | 17,84 | 5,09 | 0,78 | 0,63 | 15,28 | 101 | 11,8 | 0,1 | 191 | 116 | 12 | 130 | 99 | 167 | 323 | 138 | 164 | 209 | 1,54 |
| 33 - Gironde | 0,71 | -0,65 | -1,31 | 2,45 | 53 | 40 | 52 | 40 | 40 | 50 | 78 | 32 | 25 | 26 | 19 | 31 | 29 | 17,08 | 14,52 | 5,77 | 0,81 | 0,17 | 6,96 | 63 | 10,6 | 1,0 | 233 | 151 | 19 | 131 | 166 | 171 | 225 | 160 | 225 | 217 | 1,18 |
| 44 - Loire-Atlantique | -0,88 | 0,27 | -1,74 | 3,80 | 66 | 52 | 64 | 39 | 58 | 54 | 64 | 28 | 25 | 27 | 25 | 35 | 29 | 18,61 | 15,63 | 5,51 | 0,86 | 0,31 | 6,45 | 70 | 10,9 | 0,8 | 231 | 152 | 29 | 149 | 139 | 171 | 242 | 151 | 219 | 218 | 1,13 |
| 01 - Ain | -0,98 | -0,80 | -1,05 | 1,54 | 72 | 50 | 65 | 35 | 43 | 60 | 79 | 30 | 28 | 29 | 20 | 35 | 31 | 17,12 | 14,18 | 5,81 | 0,86 | 0,15 | 9,05 | 74 | 11,2 | 1,1 | 247 | 170 | 14 | 148 | 173 | 188 | 219 | 148 | 212 | 233 | 1,27 |
| 72 - Région Aquitaine | 0,83 | -0,59 | -0,73 | 0,85 | 59 | 36 | 56 | 40 | 40 | 48 | 76 | 31 | 25 | 26 | 19 | 31 | 25 | 17,91 | 13,13 | 5,93 | 0,85 | 0,21 | 11,06 | 81 | 12,1 | 1,2 | 244 | 199 | 20 | 108 | 176 | 200 | 229 | 145 | 197 | 230 | 1,40 |
| 52 - Haute-Marne | -0,93 | -0,81 | 3,91 | -6,46 | 65 | 40 | 63 | 46 | 37 | 58 | 62 | 31 | 20 | 30 | 30 | 40 | 39 | 19,85 | 8,29 | 6,88 | 0,88 | 0,09 | 38,96 | 70 | 16,8 | 1,9 | 369 | 515 | 15 | 70 | 322 | 282 | 188 | 143 | 135 | 245 | 2,09 |
| 64 - Pyrénées-Atlantiques | 0,81 | 0,43 | -1,48 | -1,09 | 54 | 40 | 50 | 40 | 45 | 49 | 79 | 27 | 25 | 25 | 20 | 30 | 24 | 14,38 | 11,21 | 6,30 | 0,83 | 0,16 | 13,02 | 89 | 11,9 | 1,5 | 238 | 189 | 20 | 85 | 195 | 211 | 187 | 154 | 220 | 226 | 1,33 |
| 37 - Indre-et-Loire | -0,95 | 0,29 | -0,45 | 1,71 | 61 | 53 | 65 | 50 | 42 | 55 | 63 | 26 | 25 | 25 | 37 | 35 | 35 | 17,87 | 13,68 | 5,80 | 0,89 | 0,14 | 10,50 | 76 | 12,3 | 1,4 | 234 | 164 | 24 | 120 | 172 | 206 | 271 | 130 | 169 | 221 | 1,54 |
| 57 - Moselle | -1,15 | -1,52 | 0,42 | 0,17 | 69 | 50 | 66 | 51 | 37 | 60 | 66 | 31 | 23 | 31 | 25 | 38 | 35 | 17,89 | 12,21 | 6,03 | 0,82 | 0,16 | 15,28 | 64 | 12,6 | 1,3 | 263 | 230 | 22 | 103 | 202 | 210 | 219 | 142 | 195 | 234 | 1,45 |
| 03 - Allier | 1,13 | 1,15 | 0,09 | 3,20 | 60 | 43 | 58 | 28 | 36 | 49 | 56 | 24 | 24 | 24 | 25 | 32 | 29 | 19,91 | 14,39 | 5,85 | 0,91 | 0,09 | 8,79 | 55 | 11,7 | 0,3 | 244 | 177 | 18 | 132 | 188 | 181 | 276 | 141 | 182 | 225 | 1,39 |
| 41 - Région Lorraine | -1,33 | -1,50 | 1,81 | -4,81 | 68 | 52 | 66 | 53 | 37 | 56 | 65 | 31 | 23 | 31 | 27 | 41 | 38 | 15,72 | 8,50 | 6,34 | 0,88 | 0,08 | 35,48 | 69 | 13,3 | 1,7 | 309 | 511 | 18 | 40 | 256 | 221 | 210 | 182 | 155 | 223 | 1,80 |
| 58 - Nièvre | 1,15 | -0,06 | 0,72 | -0,79 | 58 | 50 | 63 | 40 | 36 | 49 | 58 | 27 | 17 | 25 | 22 | 28 | 27 | 16,86 | 11,29 | 6,02 | 0,95 | 0,09 | 16,38 | 54 | 12,5 | 1,5 | 277 | 233 | 12 | 89 | 255 | 210 | 224 | 146 | 203 | 223 | 1,38 |
| 83 - Région Auvergne | 1,17 | 0,95 | -0,54 | 2,56 | 58 | 41 | 55 | 28 | 36 | 49 | 56 | 25 | 26 | 25 | 25 | 31 | 30 | 18,61 | 14,39 | 5,72 | 0,66 | 0,11 | 11,30 | 68 | 11,6 | 0,8 | 245 | 219 | 24 | 148 | 173 | 188 | 245 | 138 | 202 | 231 | 1,37 |
| 88 - Vosges | 1,22 | -2,30 | 0,42 | 0,17 | 60 | 50 | 60 | 41 | 0 | 50 | 57 | 31 | 21 | 31 | 27 | 40 | 32 | 17,89 | 12,21 | 6,03 | 0,82 | 0,16 | 15,28 | 64 | 12,6 | 1,3 | 263 | 230 | 22 | 103 | 202 | 210 | 219 | 142 | 195 | 234 | 1,45 |

[...]

**TABLEAU 3 :** *Pseudo* variables AGRO et PÉDO ayant servi à établir les courbes aux Figures 3, 4 et 5. Elles sont issues de l'ajustement par division de la variable AGRO RDT (ici, rendement du blé tendre d'hiver ; BTH) et des variables PÉDO par les valeurs absolues des coordonnées de la composante principale CP-1-x, soit ici celle qui est la mieux corrélée avec RDT, multipliée par le coefficient de détermination (R2) de cette corrélation [CP-1-x : RDT].

| RDT/$CP_n$ | $P_2O_5$/$CP_n$ | $K_2O$/$CP_n$ | MgO/$CP_n$ | $P_2O_5$/$K_2O$ | $P_2O_5$/MgO | $K_2O$/MgO |
|---|---|---|---|---|---|---|
| | | | | | | |
| | 173,5 | | | | | |
| | 188,8 | | | | | |
| | 198,4 | | | | | |
| | 147,1 | | | | | |
| | 125,2 | | | | | |
| | 140,1 | | | | | |
| | 151,7 | | | | | |
| 118,4 | 132,8 | 607,8 | 558,5 | 0,22 | 0,24 | 1,09 |
| 111,0 | 77,8 | 530,2 | 854,1 | 0,15 | 0,09 | 0,62 |
| 109,9 | 94,1 | 521,1 | 339,2 | 0,18 | 0,28 | 1,54 |
| 108,6 | 120,0 | 388,5 | 256,7 | 0,31 | 0,47 | 1,51 |
| 101,3 | 109,7 | 348,1 | 208,0 | 0,32 | 0,53 | 1,67 |
| 94,6 | 106,3 | 391,2 | 253,6 | 0,27 | 0,42 | 1,54 |
| 91,8 | 108,7 | 430,0 | 267,5 | 0,25 | 0,41 | 1,61 |
| 90,1 | 171,6 | 324,7 | 197,9 | 0,53 | 0,87 | 1,64 |
| 83,1 | 98,4 | 365,1 | 236,9 | 0,27 | 0,42 | 1,54 |
| 82,7 | 87,1 | 289,8 | 190,8 | 0,30 | 0,46 | 1,52 |
| 81,4 | 83,2 | 278,8 | 192,6 | 0,30 | 0,43 | 1,45 |
| 78,8 | 108,7 | 325,9 | 265,6 | 0,33 | 0,41 | 1,23 |
| 77,0 | 83,1 | 437,7 | 610,5 | 0,19 | 0,14 | 0,72 |
| 73,5 | 121,6 | 323,8 | 257,4 | 0,38 | 0,47 | 1,26 |
| 71,2 | 88,2 | 272,5 | 190,9 | 0,32 | 0,46 | 1,43 |
| 66,2 | 61,6 | 252,1 | 220,3 | 0,24 | 0,28 | 1,14 |
| 58,9 | 53,6 | 240,0 | 173,5 | 0,22 | 0,31 | 1,38 |
| 56,4 | 56,9 | 255,9 | 423,6 | 0,22 | 0,13 | 0,60 |
| 55,9 | 52,3 | 267,4 | 224,5 | 0,20 | 0,23 | 1,19 |
| 54,9 | 64,5 | 231,8 | 207,3 | 0,28 | 0,31 | 1,12 |
| 54,3 | 57,9 | 238,1 | 208,0 | 0,24 | 0,28 | 1,14 |
| 53,5 | 58,5 | 230,3 | 152,8 | 0,25 | 0,38 | 1,51 |
| 51,2 | 63,8 | 217,7 | 208,5 | 0,29 | 0,31 | 1,04 |
| 48,1 | 51,6 | 180,7 | 157,9 | 0,29 | 0,33 | 1,14 |
| 46,4 | 55,5 | 152,8 | 102,9 | 0,36 | 0,54 | 1,49 |
| 46,4 | 52,9 | 192,3 | 119,5 | 0,28 | 0,44 | 1,61 |
| 45,8 | 67,1 | 219,7 | 223,9 | 0,31 | 0,30 | 0,98 |
| 45,5 | 45,0 | 209,6 | 347,0 | 0,21 | 0,13 | 0,60 |

(suite)

| RDT/CP$_n$ | P$_2$O$_5$/CP$_n$ | K$_2$O/CP$_n$ | MgO/CP$_n$ | P$_2$O$_5$/K$_2$O | P$_2$O$_5$/MgO | K$_2$O/MgO |
|---|---|---|---|---|---|---|
| 44,9 | 48,6 | 179,3 | 140,9 | 0,27 | 0,34 | 1,27 |
| 43,3 | 55,9 | 194,3 | 128,2 | 0,29 | 0,44 | 1,52 |
| 43,1 | 64,3 | 232,4 | 324,8 | 0,28 | 0,20 | 0,72 |
| 42,7 | 48,7 | 187,1 | 126,5 | 0,26 | 0,39 | 1,48 |
| 41,6 | 51,7 | 144,0 | 87,0 | 0,36 | 0,59 | 1,66 |
| 38,6 | 66,5 | 126,6 | 81,7 | 0,52 | 0,81 | 1,55 |
| 35,8 | 44,2 | 181,4 | 141,9 | 0,24 | 0,31 | 1,28 |
| 33,6 | 31,9 | 117,0 | 79,6 | 0,27 | 0,40 | 1,47 |
| 32,5 | 45,8 | 137,9 | 102,7 | 0,33 | 0,45 | 1,34 |
| 32,3 | 49,9 | 103,9 | 67,7 | 0,48 | 0,74 | 1,54 |
| 31,3 | 56,0 | 138,7 | 123,6 | 0,40 | 0,45 | 1,12 |
| 31,0 | 39,5 | 167,9 | 142,2 | 0,24 | 0,28 | 1,18 |
| 29,4 | 40,2 | 151,3 | 103,7 | 0,27 | 0,39 | 1,46 |
| 28,0 | 52,0 | 95,9 | 61,6 | 0,54 | 0,85 | 1,56 |
| 27,9 | 38,8 | 139,4 | 135,5 | 0,28 | 0,29 | 1,03 |
| 27,1 | 40,6 | 80,8 | 52,0 | 0,50 | 0,78 | 1,55 |
| 26,4 | 32,8 | 106,4 | 89,0 | 0,31 | 0,37 | 1,20 |
| 26,1 | 27,1 | 112,0 | 109,9 | 0,24 | 0,25 | 1,02 |
| 26,1 | 30,2 | 112,4 | 147,4 | 0,27 | 0,20 | 0,76 |
| 24,2 | 24,4 | 101,6 | 79,0 | 0,24 | 0,31 | 1,29 |
| 24,2 | 24,7 | 68,0 | 57,8 | 0,36 | 0,43 | 1,18 |
| 23,1 | 26,1 | 79,8 | 53,7 | 0,33 | 0,49 | 1,48 |
| 21,8 | 20,3 | 87,2 | 70,4 | 0,23 | 0,29 | 1,24 |
| 21,0 | 22,0 | 60,3 | 37,8 | 0,36 | 0,58 | 1,59 |
| 20,8 | 20,7 | 58,1 | 36,7 | 0,36 | 0,56 | 1,58 |
| 20,7 | 25,1 | 60,0 | 37,4 | 0,42 | 0,67 | 1,60 |
| 20,2 | 21,4 | 62,3 | 48,2 | 0,34 | 0,44 | 1,29 |
| 20,0 | 29,8 | 58,8 | 48,2 | 0,51 | 0,62 | 1,22 |
| 19,1 | 26,7 | 56,9 | 42,8 | 0,47 | 0,62 | 1,33 |
| 18,7 | 24,9 | 56,2 | 38,3 | 0,44 | 0,65 | 1,47 |
| 18,6 | 19,8 | 54,8 | 39,7 | 0,36 | 0,50 | 1,38 |
| 18,4 | 20,6 | 55,4 | 40,6 | 0,37 | 0,51 | 1,36 |
| 18,1 | 19,5 | 62,3 | 46,9 | 0,31 | 0,42 | 1,33 |
| 17,7 | 26,1 | 80,0 | 49,5 | 0,33 | 0,53 | 1,62 |
| 17,3 | 31,9 | 134,0 | 121,5 | 0,24 | 0,26 | 1,10 |
| 17,3 | 14,0 | 95,4 | 86,9 | 0,15 | 0,16 | 1,10 |
| 17,1 | 30,5 | 80,6 | 54,3 | 0,38 | 0,56 | 1,49 |
| 15,9 | 20,4 | 48,0 | 33,8 | 0,42 | 0,60 | 1,42 |

(suite)

| RDT/CP$_n$ | P$_2$O$_5$/CP$_n$ | K$_2$O/CP$_n$ | MgO/CP$_n$ | P$_2$O$_5$/K$_2$O | P$_2$O$_5$/MgO | K$_2$O/MgO |
|---|---|---|---|---|---|---|
| 15,4 | 6,6 | 106,8 | 97,3 | 0,06 | 0,07 | 1,10 |
| 15,0 | 18,9 | 92,3 | 133,0 | 0,21 | 0,14 | 0,69 |
|  | 18,4 |  |  |  |  |  |
|  | 14,9 |  |  |  |  |  |
|  | 8,5 |  |  |  |  |  |
|  | 19,8 |  |  |  |  |  |
|  | 20,1 |  |  |  |  |  |

Bien que les coordonnées des CPn sont nécessairement distribuées normalement, certaines de ces *pseudo* variables peuvent être disproportionnées (*i.e.* soit très petites, soit très grandes par rapport aux valeurs AGRO et PÉDO réelles). Cela est du aux valeurs des coordonnées X et Y des CPn qui, parce que centrées sur 0,00, vont parfois être très petites, et parfois bien supérieures à 1,00, soit ici à hauteur de plus de 6,00. Nb. Dans le Tableau 2, le coordonnées CPn X et Y sont affichées à deux décimales, d'où certaines valeurs 0,00 ; dans les fait, la précisions mathématique de ces coordonnées est de 4, voire 5 décimales.

En principe, ces disproportions ne devraient pas altérer outre mesure la pente de la relation [*pseudo* PÉDO : *pseudo* AGRO] (Figures 3, 4 et 5). Dans les faits, ces disproportions provoquent des artéfacts numériques qui doivent être évités. On peut dans une premier temps éliminer les valeurs démesurées (*cf*. Tableau 3 ; seule les fractions retenues sont affichées), et dans un second temps diviser les variables AGRO et PÉDO par le log des valeurs absolues des coordonnées CPn X et Y correspondantes ; le nombre de *pseudo* valeurs disproportionnées est ainsi réduit et les courbes aux Figures 3, 4 et 5 peuvent être tracées avec une nombre suffisant de *pseudo* valeurs proportionnées (commensurables) aux valeurs agronomiques (RDT) et P$_2$O$_5$ réelles.

L'invention est réalisée ici à partir d'un groupe d'observations individuelles comprenant 107 moyennes régionales et départementales pour la SAU française (Tableau 2) et K = 2 groupes de mesures variables dites AGRO (essentiellement des rendement en grains de grandes cultures) et PÉDO (essentiellement les usuelles mesures variables rapportées par le Gissol dans BDAT). Or, K = 2 n'est pas ici limitatif, et l'invention est susceptible d'être appliquée si K est supérieur à 2. On peut entrevoir par exemple l'utilisation de mesures variables AGRO pour la qualité et/ou le calibre des rendements, la stabilité de ces rendements à travers l'espace et le temps, ou encore de variables PÉDO concernant l'activité, la diversité et/ou la résilience des flores microbiennes du sol.

L'invention, susceptible d'être appliquée en agronomie, permettra d'établir, selon des caractéristiques agronomiques et pédologiques, des valeurs uniques et universelles en terme de teneurs des sols en P, K, voire Mg, nécessairement associées à une rendement agronomique donné, potentiel, ou souhaité. Ce rendement peut être une moyenne nationale, régionale, départementale ou cantonale, voire plus avantageusement estimé à partir d'une mesure intra - saisonnière du potentiel de rendement (pRDT).

L'utilisateur va ainsi pouvoir directement mesurer qu'elle teneur du sol en P$_2$O$_5$, K$_2$O et/ou MgO est nécessaire, sans pour autant être suffisante comme de raison, à l'obtention dudit rendement (RDT). Si la teneur du sol est supérieure à cette mesure, il peut faire l'impasse d'engrais PKMg ; dans le cas contraire, il faut apporter une dose d'engrais PKMg. A ce stade, le calcul de la dose redevient conventionnelle, *i.e.* comme le propose le Comifer 2001, 2007, à savoir ;

Dose d'engrais à épandre = Rendement x Exportations x Coefficient
(kg de P$_2$O$_5$ ou K$_2$O /ha) (RDT /ha) ( kg de P$_2$O$_5$ ou K$_2$O /RDT)

Les coefficients (multiplicatifs d'exportations) sont eux repérables directement sur la grille proposée par le Comifer 2007, 2009. Cela dit, à noter que le but ultime est d'ajuster les teneurs PKMg des sols selon le RDT souhaité (lire : attendu, ou recherché) à des niveaux indiqués aux Figure 3, 4 et 5 ; toute approche agronomique, présente ou future, pouvant effectuer cette ajustement est parfaitement en accord avec la présente invention.

## APPLICATIONS BIOINDUSTRIELLES ET AGRONOMIQUES

Pour valider l'amélioration technique que représente l'invention, je vais comparer les préconisations PK selon la présente invention ce celles basées sur la réponse des rendements agronomique de blé tendre d'hiver sur un sol en particulier (Alsace, France ; Tableau 4). si ces préconisation sont effectivement comparables, voire plus précises selon la présente invention, l'avantage que représente cette innovation plus universelle et moins onéreuse en termes d'expérimentation et de calibration *in situ* sera évidente.

**Tableau 4 :** Données agro - pédologiques de l'essai de calibration sur une site (sol) Alsacien ; récolte été 2012. Doses par hectare de $P_2O_5$ et de $K_2O$, leur dosage ten g/kg de sol sans l'apport de ces doses, et leur disponibilité, *i.e.* la somme de ces deux quantité, ainsi que les rendements (RDT) en blé tendre d'hiver (BTH), sa production de matières sèches par hectare (MSPA), la teneur en protéine de son grain à la récolte (PRT), et le rendement protéique (RDN ; RDT x PRT/100).

| Dose $P_2O_5$ kg/ha | Dose $K_2O$ kg/ha | Dosage g$P_2O_5$/kg Dyer | Disponibilité $P_2O_5$ Dyer | Dosage g$P_2O_5$/kg Olsen | Disponibilité $P_2O_5$ Olsen | Dosage $K_2O$/kg Echgbl. | Disponibilité $K_2O$ Échgbl. | RDT qx/ha | MSPA kg/ha | %PRT grain | RDN qx/ha |
|---|---|---|---|---|---|---|---|---|---|---|---|
| 0 | 0 | 210 | **210** | 39,0 | **39,0** | 71,0 | **71,0** | 46,9 | 6160 | 11,8 | 5,53 |
| 0 | 0 | 230 | **230** | 37,0 | **37,0** | 77,0 | **77,0** | 54 | 7230 | 11,3 | 6,12 |
| 0 | 0 | 200 | **200** | 33,0 | **33,0** | 81,0 | **81,0** | 43,1 | 5730 | 11,5 | 4,96 |
| 0 | 0 | 180 | **180** | 34,0 | **34,0** | 76,0 | **76,0** | 50,9 | 6690 | 9,4 | 4,76 |
| 50 | 0 | 270 | **292** | 37,0 | **59,1** | 72,0 | **72,0** | 50,8 | 6910 | 10,7 | 5,45 |
| 50 | 0 | 230 | **252** | 39,0 | **61,1** | 82,0 | **82,0** | 52,7 | 7010 | 10,4 | 5,46 |
| 50 | 0 | 200 | **222** | 33,0 | **55,1** | 78,0 | **78,0** | 49,4 | 6640 | 10,7 | 5,27 |
| 50 | 0 | 230 | **252** | 38,0 | **60,1** | 72,0 | **72,0** | 58,5 | 7420 | 9,4 | 5,50 |
| 0 | 46 | 230 | **230** | 32,0 | **32,0** | 83,0 | **103,3** | 45,6 | 6270 | 11,6 | 5,30 |
| 0 | 46 | 210 | **210** | 33,0 | **33,0** | 82,0 | **102,3** | 47,3 | 6490 | 10,0 | 4,72 |
| 0 | 46 | 220 | **220** | 24,0 | **24,0** | 79,0 | **99,3** | 46,9 | 6030 | 11,2 | 5,24 |
| 0 | 46 | 220 | **220** | 37,0 | **37,0** | 79,0 | **99,3** | 55,7 | 7150 | 11,3 | 6,32 |
| 50 | 46 | 210 | **232** | 36,0 | **58,1** | 80,0 | **100,3** | 54,8 | 7240 | 9,1 | 5,00 |
| 50 | 46 | 220 | **242** | 29,0 | **51,1** | 87,0 | **107,3** | 56,4 | 7440 | 9,6 | 5,43 |
| 50 | 46 | 240 | **262** | 41,0 | **63,1** | 79,0 | **99,3** | 60,6 | 8230 | 10,5 | 6,36 |
| 50 | 46 | 220 | **242** | 37,0 | **59,1** | 78,0 | **98,3** | 56,5 | 7460 | 10,3 | 5,83 |
| 50 | 46 | 220 | **242** | 30,0 | **52,1** | 87,0 | **107,3** | 54,2 | 6970 | 9,7 | 5,25 |
| 50 | 46 | 260 | **282** | 37,0 | **59,1** | 79,0 | **99,3** | 60,8 | 7560 | 10,9 | 6,65 |
| 50 | 46 | 230 | **252** | 42,0 | **64,1** | 84,0 | **104,3** | 61,1 | 8430 | 9,6 | 5,88 |
| 50 | 46 | 190 | **212** | 37,0 | **59,1** | 80,0 | **100,3** | 57,9 | 7670 | 10,1 | 5,84 |

Pour ce qui concerne les engrais P capable en principe d'augmenter dP, les préconisations selon la présente invention sont donc commensurables avec celles obtenues via cette première étude de calibration particulière à un sol (Alsace) sur une campagne (récolte 2012 ; Tableau 6 et 7). Les préconisations d'engrais K devant augmenter dK sont elles cependant nettement plus importantes, par un facteur de 2 à plus de 3 ; voir aussi Figure 9. Même avec des données pluriannuelles sur plusieurs sites (Tableau 5), les préconisations K seront très imprécises du fait d'une relation mitscherlichienne bien floue (Figure 10) ; l'avantage de relations intrinsèques dK : RDT au sens de la présente invention (bas, Figures 3 et 4) est ici bien évidente.

**Tableau 6 :** Comparaisons des préconisations de P, K et Mg selon une courbe de réponse simplement logarithmique (LOG) des données agro-pédologique de l'étude de calibration (Tableau 4) par rapport à celles selon la présente invention pour divers rendement (RDT) de blé tendre d'hiver (BTH) attendus.

|  | RDT attendu Qx BTH / ha | LOG selon étude g/kg de sol | iPK selon l'invention g/kg de sol | iPK/LOG |
|---|---|---|---|---|
| $P_2O_5$ Dyer | 45,0 | 172 | 174 | 1,01 |
| $P_2O_5$ Olsen | 45,0 | 40 | 53 | 1,34 |
| $K_2O$ échangeable | 45,0 | 112 | 188 | 1,68 |
| $P_2O_5$ Dyer | 64,4 | 211 | 247 | 1,17 |
| $P_2O_5$ Olsen | 64,4 | 70 | 74 | 1,06 |
| $K_2O$ échangeable | 64,4 | 145 | 273 | 1,88 |
| $P_2O_5$ Dyer | 72,0 | 223 | 275 | 1,23 |
| $P_2O_5$ Olsen | 72,0 | 79 | 82 | 1,03 |
| $K_2O$ échangeable | 72,0 | 156 | 306 | 1,97 |
| $P_2O_5$ Dyer | 90,0 | 247 | 342 | 1,38 |
| $P_2O_5$ Olsen | 90,0 | 98 | 101 | 1,03 |
| $K_2O$ échangeable | 90,0 | 176 | 385 | 2,18 |

**Tableau 7 :** Comparaisons des préconisations de P, K et Mg selon une courbe de réponse mitscherlichienne classique (LOG) des données agro-pédologique de l'étude de calibration (Tableau 4) par rapport à celles selon la présente invention pour divers rendement (RDT) de blé tendre d'hiver (BTH) attendus.

|  | RDT attendu Qx BTH / ha | MIT selon étude g/kg de sol | iPK selon l'invention g/kg de sol | iPK/MIT |
|---|---|---|---|---|
| $P_2O_5$ Dyer | 45,0 | 169 | 174 | 1,03 |
| $P_2O_5$ Olsen | 45,0 | 38,4 | 53 | 1,38 |
| $K_2O$ échangeable | 45,0 | 74,5 | 188 | 2,53 |
| $P_2O_5$ Dyer | 64,4 | 206 | 247 | 1,20 |
| $P_2O_5$ Olsen | 64,4 | 66,8 | 74 | 1,10 |
| $K_2O$ échangeable | 64,4 | 96,2 | 273 | 2,84 |
| $P_2O_5$ Dyer | 72,0 | 210 | 275 | 1,31 |
| $P_2O_5$ Olsen | 72,0 | 68,5 | 82 | 1,19 |
| $K_2O$ échangeable | 72,0 | 99,4 | 306 | 3,08 |
| $P_2O_5$ Dyer | 90,0 | 214 | 342 | 1,60 |
| $P_2O_5$ Olsen | 90,0 | 69,2 | 101 | 1,46 |
| $K_2O$ échangeable | 90,0 | 102,2 | 385 | 3,76 |

EP 2 774 467 A1

**Tableau 5** (page suivante) : Données agro - pédologiques pour l'essai de calibration sur divers sites Alsaciens de 2008 à 2013. Les données comprennent les dose par hectare de $P_2O_5$ et de $K_2O$ apportées, ainsi que le dosage du sol en $K_2O$ avant les dits apports, la disponibilité du $K_2O$ étant ici la somme dose + dosage. Les rendements (RDT ; qx/ha) en grains de blé tendre d'hiver (BTH) à la récolte, leurs teneurs en protéines (PRT ; %) et rendements protéiques (RDN ; RDT x PRT/100), ainsi que la matière sèche des parties aérienne (MSPA ; t/ha) produite sont tous normalisés sur une base 100 (n:100) de manière à permettre cette compilation multi-sites et pluriannuelles.

| Dose $P_2O_5$ kg/ha | Dose $K_2O$ kg/ha | Dosage g$K_2O$/kg échangeable | n:100 | Disponibilité $K_2O$ | n:100 | RDT qx/ha | n:100 | MSPA t/ha | n:100 | %PRT grain | n:100 | RDN qx/ha | n100 |
|---|---|---|---|---|---|---|---|---|---|---|---|---|---|
| 0 | 0 | 80 | 53 | 80 | 48 | 93 | 100 | 11524 | 94 | 12,3 | 101 | 11 | 101 |
| 0 | 37,5 | 150 | 99 | 167 | 99 | 96 | 103 | 12412 | 101 | 12,3 | 101 | 12 | 104 |
| 0 | 37,5 | 120 | 79 | 152 | 90 | 87 | 94 | 11938 | 97 | 12,1 | 99 | 11 | 93 |
| 0 | 70 | 110 | 73 | 110 | 66 | 86 | 93 | 11561 | 94 | 12,4 | 101 | 11 | 94 |
| 0 | 0 | 160 | 105 | 177 | 105 | 92 | 99 | 11864 | 97 | 12,1 | 99 | 11 | 98 |
| 0 | 37,5 | 160 | 105 | 192 | 114 | 86 | 92 | 11479 | 93 | 12,2 | 100 | 10 | 93 |
| 0 | 70 | 120 | 79 | 120 | 72 | 96 | 103 | 12557 | 102 | 12,5 | 102 | 12 | 105 |
| 0 | 0 | 200 | 132 | 217 | 129 | 98 | 105 | 12870 | 105 | 11,8 | 97 | 11 | 102 |
| 0 | 37,5 | 140 | 92 | 172 | 102 | 87 | 94 | 11683 | 95 | 12,3 | 101 | 11 | 95 |
| 0 | 0 | 150 | 99 | 150 | 89 | 98 | 106 | 13607 | 111 | 12,5 | 102 | 12 | 109 |
| 0 | 37,5 | 250 | 165 | 267 | 159 | 93 | 100 | 12523 | 102 | 11,9 | 97 | 11 | 98 |
| 0 | 70 | 180 | 119 | 212 | 126 | 101 | 109 | 13328 | 109 | 12,0 | 99 | 12 | 108 |
| 0 | 0 | 71 | 90 | 71 | 78 | 46,9 | 88 | 6160 | 88 | 11,8 | 113 | 6 | 100 |
| 0 | 0 | 77 | 97 | 77 | 84 | 54 | 101 | 7230 | 103 | 11,3 | 108 | 6 | 110 |
| 0 | 0 | 81 | 102 | 81 | 89 | 43,1 | 81 | 5730 | 81 | 11,5 | 110 | 5 | 89 |
| 0 | 0 | 76 | 96 | 76 | 83 | 50,9 | 96 | 6690 | 95 | 9,4 | 89 | 5 | 86 |
| 50 | 0 | 72 | 91 | 72 | 79 | 50,8 | 95 | 6910 | 98 | 10,7 | 102 | 5 | 98 |
| 50 | 0 | 82 | 103 | 82 | 90 | 52,7 | 99 | 7010 | 100 | 10,4 | 99 | 5 | 99 |
| 50 | 0 | 78 | 98 | 78 | 85 | 49,4 | 93 | 6640 | 94 | 10,7 | 102 | 5 | 95 |
| 50 | 0 | 72 | 91 | 72 | 79 | 58,5 | 110 | 7420 | 105 | 9,4 | 90 | 6 | 99 |
| 0 | 46 | 83 | 105 | 103 | 113 | 45,6 | 86 | 6270 | 89 | 11,6 | 111 | 5 | 96 |
| 0 | 46 | 82 | 103 | 102 | 112 | 47,3 | 89 | 6490 | 92 | 10,0 | 95 | 5 | 85 |
| 0 | 46 | 79 | 100 | 99 | 109 | 46,9 | 88 | 6030 | 86 | 11,2 | 107 | 5 | 94 |
| 0 | 46 | 79 | 100 | 99 | 109 | 55,7 | 105 | 7150 | 102 | 11,3 | 108 | 6 | 114 |
| 0 | 46 | 80 | 101 | 100 | 110 | 54,8 | 103 | 7240 | 103 | 9,1 | 87 | 5 | 90 |
| 50 | 46 | 87 | 110 | 107 | 117 | 56,4 | 106 | 7440 | 106 | 9,6 | 92 | 5 | 98 |
| 50 | 46 | 79 | 100 | 99 | 109 | 60,6 | 114 | 8230 | 117 | 10,5 | 100 | 6 | 115 |

| Dose P$_2$O$_5$ kg/ha | Dose K$_2$O kg/ha | Dosage gK$_2$O/kg échangeable | n:100 | Disponibilité K$_2$O | n:100 | RDT qx/ha | n:100 | MSPA t/ha | n:100 | %PRT grain | n:100 | RDN qx/ha | n100 |
|---|---|---|---|---|---|---|---|---|---|---|---|---|---|
| 50 | 46 | 78 | 98 | 98 | 107 | 56,5 | 106 | 7460 | 106 | 10,3 | 99 | 6 | 105 |
| 50 | 46 | 87 | 110 | 107 | 117 | 54,2 | 102 | 6970 | 99 | 9,7 | 93 | 5 | 95 |
| 50 | 46 | 79 | 100 | 99 | 109 | 60,8 | 114 | 7560 | 107 | 10,9 | 105 | 7 | 120 |
| 50 | 46 | 84 | 106 | 104 | 114 | 61,1 | 115 | 8430 | 120 | 9,6 | 92 | 6 | 106 |
| 50 | 46 | 80 | 101 | 100 | 110 | 57,9 | 109 | 7670 | 109 | 10,1 | 96 | 6 | 105 |
| 0 | 0 | 120 | 78 | 120 | 78 | 69,8 | 103 | 10750 | 102 | 12,2 | 96 | 9 | 99 |
| 0 | 0 | 120 | 78 | 120 | 78 | 70,5 | 104 | 10310 | 98 | 11,3 | 89 | 8 | 92 |
| 0 | 0 | 170 | 110 | 170 | 110 | 54,2 | 80 | 8140 | 77 | 12,4 | 97 | 7 | 77 |
| 0 | 0 | 170 | 110 | 170 | 110 | 65 | 95 | 10640 | 101 | 12,4 | 97 | 8 | 93 |
| 0 | 0 | 130 | 84 | 130 | 84 | 74,7 | 110 | 11280 | 107 | 13,1 | 103 | 10 | 113 |
| 0 | 0 | 150 | 97 | 150 | 97 | 72,3 | 106 | 10650 | 101 | 11,4 | 90 | 8 | 96 |
| 0 | 0 | 200 | 130 | 200 | 130 |  |  |  |  | 13,2 | 104 |  |  |
| 0 | 0 | 110 | 71 | 110 | 71 | 65,7 | 97 | 9690 | 92 | 13,7 | 107 | 9 | 104 |
| 0 | 0 | 220 | 143 | 220 | 143 | 63 | 93 | 9680 | 92 | 10,9 | 86 | 7 | 79 |
| 0 | 0 | 160 | 104 | 160 | 104 | 67,8 | 100 | 10680 | 102 | 14,1 | 111 | 10 | 111 |
| 0 | 0 | 170 | 110 | 170 | 110 | 65,7 | 97 | 10500 | 100 | 11,8 | 92 | 8 | 89 |
| 0 | 0 | 120 | 78 | 120 | 78 | 68,7 | 101 | 10560 | 100 | 13,7 | 107 | 9 | 109 |
| 0 | 0 | 190 | 123 | 190 | 123 | 73,4 | 108 | 11420 | 109 | 13,5 | 106 | 10 | 114 |
| 0 | 0 | 190 | 123 | 190 | 123 | 63,2 | 93 | 9970 | 95 | 12,0 | 94 | 8 | 88 |
| 0 | 0 | 110 | 71 | 110 | 71 | 73,9 | 109 | 11460 | 109 | 13,3 | 105 | 10 | 114 |
| 0 | 0 | 140 | 91 | 140 | 91 | 62,4 | 92 | 9630 | 92 | 13,6 | 107 | 8 | 98 |
| 0 | 0 | 160 | 104 | 160 | 104 | 73,8 | 108 | 13210 | 126 | 12,8 | 101 | 9 | 109 |
| 0 | 0 | 130 | 84 | 130 | 84 | 78,7 | 116 | 12580 | 120 | 11,2 | 88 | 9 | 102 |
| 0 | 0 | 110 | 71 | 110 | 71 | 72,4 | 106 | 11130 | 106 | 13,4 | 105 | 10 | 112 |
| 0 | 0 | 210 | 136 | 210 | 136 | 58,1 | 85 | 7530 | 72 | 14,9 | 117 | 9 | 100 |
| 0 | 0 | 70 | 50 | 70 | 45 | 60,7 | 101 | 9650 | 109 | 12,7 | 97 | 8 | 98 |
| 0 | 67 | 160 | 115 | 189 | 122 | 69,1 | 115 | 10310 | 116 | 12,8 | 98 | 9 | 113 |
| 0 | 37,5 | 100 | 72 | 117 | 75 | 79,4 | 132 | 10690 | 121 | 12,5 | 96 | 10 | 127 |
| 0 | 0 | 80 | 57 | 80 | 52 | 60,4 | 100 | 9610 | 108 | 12,7 | 97 | 8 | 98 |
| 0 | 67 | 140 | 100 | 169 | 109 | 73,6 | 122 | 10910 | 123 | 12,5 | 96 | 9 | 117 |
| 0 | 37,5 | 100 | 72 | 117 | 75 | 66,9 | 111 | 9120 | 103 | 12,6 | 97 | 8 | 107 |

EP 2 774 467 A1

(suite)

| Dose P$_2$O$_5$ kg/ha | Dose K$_2$O kg/ha | Dosage gK$_2$O/kg échangeable | n:100 | Disponibilité K$_2$O | n:100 | RDT qx/ha | n:100 | MSPA t/ha | n:100 | %PRT grain | n:100 | RDN qx/ha | n100 |
|---|---|---|---|---|---|---|---|---|---|---|---|---|---|
| 0 | 0 | 140 | 100 | 140 | 90 | 79,7 | 132 | 13930 | 157 | 13,5 | 103 | 11 | 137 |
| 0 | 67 | 220 | 158 | 249 | 161 | 73,6 | 122 | 9610 | 108 | 12,3 | 94 | 9 | 115 |
| 0 | 37,5 | 100 | 72 | 117 | 75 | 79,1 | 131 | 11260 | 127 | 13,7 | 105 | 11 | 138 |
| 0 | 0 | 90 | 64 | 90 | 58 | 59,9 | 100 | 8500 | 96 | 12,9 | 99 | 8 | 98 |
| 0 | 67 | 200 | 143 | 229 | 148 | 62 | 103 | 8690 | 98 | 13,0 | 100 | 8 | 103 |
| 0 | 37,5 | 160 | 115 | 177 | 114 | 69,5 | 116 | 11090 | 125 | 13,6 | 104 | 9 | 120 |
| 0 | 0 | 60 | 43 | 60 | 39 | 34,8 | 58 | 5860 | 66 | 12,5 | 96 | 4 | 55 |
| 0 | 67 | 160 | 115 | 189 | 122 | 68,3 | 114 | 10080 | 114 | 12,8 | 98 | 9 | 111 |
| 0 | 37,5 | 80 | 57 | 97 | 63 | 53 | 88 | 6480 | 73 | 12,6 | 97 | 7 | 85 |
| 0 | 0 | 70 | 50 | 70 | 45 | 31 | 52 | 5240 | 59 | 12,5 | 96 | 4 | 49 |
| 0 | 67 | 160 | 115 | 189 | 122 | 62,3 | 104 | 8320 | 94 | 13,1 | 100 | 8 | 104 |
| 0 | 37,5 | 130 | 93 | 147 | 95 | 61,6 | 102 | 9800 | 110 | 13,9 | 107 | 9 | 109 |
| 0 | 0 | 80 | 57 | 80 | 52 | 46,4 | 77 | 6000 | 68 | 13,0 | 100 | 6 | 77 |
| 0 | 67 | 200 | 143 | 229 | 148 | 62,2 | 103 | 9500 | 107 | 13,5 | 103 | 8 | 107 |
| 0 | 37,5 | 120 | 86 | 137 | 88 | 60,4 | 100 | 8280 | 93 | 13,2 | 101 | 8 | 102 |
| 0 | 0 | 150 | 107 | 150 | 97 | 37,6 | 62 | 5800 | 65 | 13,6 | 104 | 5 | 65 |
| 0 | 67 | 280 | 201 | 309 | 200 | 57,2 | 95 | 11230 | 127 | 12,7 | 97 | 7 | 93 |
| 0 | 37,5 | 150 | 107 | 167 | 108 | 63,4 | 105 | 9370 | 106 | 13,3 | 102 | 8 | 107 |
| 0 | 0 | 100 | 72 | 100 | 65 | 35,2 | 59 | 4290 | 48 | 13,5 | 103 | 5 | 61 |
| 0 | 67 | 170 | 122 | 199 | 129 | 45,6 | 76 | 8800 | 99 | 13,9 | 107 | 6 | 81 |
| 0 | 37,5 | 110 | 79 | 127 | 82 | 59,6 | 99 | 8290 | 93 | 13,6 | 104 | 8 | 103 |
| 0 | 0 | 90 | 64 | 90 | 58 | 49,5 | 82 | 8100 | 91 | 12,9 | 99 | 6 | 81 |
| 0 | 67 | 220 | 158 | 249 | 161 | 62,5 | 104 | 8780 | 99 | 13,2 | 101 | 8 | 105 |
| 0 | 37,5 | 130 | 93 | 147 | 95 | 66,6 | 111 | 10500 | 118 | 13,2 | 101 | 9 | 112 |
| 0 | 0 | 90 | 64 | 90 | 58 | 43,1 | 72 | 6050 | 68 | 12,9 | 99 | 6 | 71 |
| 0 | 67 | 200 | 143 | 229 | 148 | 65,4 | 109 | 9110 | 103 | 13,2 | 101 | 9 | 110 |
| 0 | 37,5 | 150 | 107 | 167 | 108 | 53,8 | 89 | 9330 | 105 | 14,0 | 107 | 8 | 96 |
| 0 | 0 | 110 | 79 | 110 | 71 | 59 | 98 | 8880 | 100 | 13,4 | 103 | 8 | 101 |
| 0 | 67 | 230 | 165 | 259 | 167 | 65,9 | 110 | 8870 | 100 | 12,7 | 97 | 8 | 107 |
| 0 | 37,5 | 150 | 107 | 167 | 108 | 61,1 | 102 | 8690 | 98 | 13,3 | 102 | 8 | 104 |
| 0 | 0 | 80 | 57 | 80 | 52 | 43,6 | 72 | 5730 | 65 | 12,7 | 97 | 6 | 71 |

(suite)

| Dose $P_2O_5$ kg/ha | Dose $K_2O$ kg/ha | Dosage g$K_2O$/kg échangeable | n:100 | Disponibilité $K_2O$ | n:100 | RDT qx/ha | n:100 | MSPA t/ha | n:100 | %PRT grain | n:100 | RDN qx/ha | n100 |
|---|---|---|---|---|---|---|---|---|---|---|---|---|---|
| 0 | 67 | 150 | 107 | 179 | 116 | 74 | 123 | 9810 | 111 | 13,3 | 102 | 10 | 125 |
| 0 | 37,5 | 120 | 86 | 137 | 88 | 70,7 | 118 | 10080 | 114 | 13,4 | 103 | 9 | 121 |
| 0 | 0 | 110 | 79 | 110 | 71 | 71,4 | 119 | 9810 | 111 | 12,9 | 99 | 9 | 117 |
| 0 | 67 | 210 | 150 | 239 | 154 | 63,2 | 105 | 9110 | 103 | 13,3 | 102 | 8 | 107 |
| 0 | 37,5 | 130 | 93 | 147 | 95 | 65 | 108 | 10050 | 113 | 11,9 | 91 | 8 | 99 |
| 0 | 0 | 100 | 72 | 100 | 65 | 51,2 | 85 | 7590 | 86 | 13,7 | 105 | 7 | 89 |
| 0 | 67 | 220 | 158 | 249 | 161 | 65,9 | 110 | 9090 | 102 | 12,7 | 97 | 8 | 107 |
| 0 | 37,5 | 120 | 86 | 137 | 88 | 70 | 116 | 8880 | 100 | 12,5 | 96 | 9 | 112 |
| 0 | 0 | 120 | 86 | 120 | 77 | 57,9 | 96 | 8830 | 100 | 13,2 | 101 | 8 | 97 |
| 0 | 67 | 230 | 165 | 259 | 167 | 58,2 | 97 | 7880 | 89 | 11,8 | 90 | 7 | 88 |
| 0 | 37,5 | 160 | 115 | 177 | 114 | 57,2 | 95 | 9830 | 111 | 13,5 | 103 | 8 | 98 |

A noter que cette étude *in situ* particulière et annuelle sur un seul site ne génère une gamme de points variables dP et RDT restreinte, soit bien inférieure à celles aperçues dans Urrisi et al. 1998 (en serre et en pot) ou Dodd et Mallarino 2005, ou encore Colomb et al. 2007, ces deux dernière études étant elles pluriannuelles sur 27 et 36 ans, respectivement ; encore une fois, ce type d'études sont donc rares, éparse et coûteuses. L'aspect mitscherlichien de telles courbes de réponse RDT:dP n'est donc pas du tout ici défendable.

Paradoxalement, ces mêmes points variables sont superposables (Figures 7 et 8) aux courbes représentant lesdites *pseudo* variables AGRO et PÉDO au sens de la présente invention, et donc réconciliables avec la présente approche linéaire contraire à l'approche non linéaire plus classique (Figure 1). Les différentiels de $P_2O_5$ disponible ($dP_2O_5$) de l'ordre de 50 mg/kg de sol, et de RDT de l'ordre de 60%, en comparaison à différentiels de 2 et 10 plus importants, respectivement, si nous devions appliquer avec succès l'équation Mitscherlich, sont donc de l'ordre de grandeur requise pour l'application de l'invention. Or, ces différentiels sont effectivement comparables à ceux observés entre les divers RDT et dPi au Tableau 2 utilisés ici pour l'élaboration des droites RDT' : dPKMg' aux Figure 7 à 9 ; Tableau 8.

**Tableau 8 :** Étendus des gammes de valeurs (*i.e.* moyennes par département français ; Tableau 2) pour les rendements agronomiques en grains de diverses grandes cultures, ainsi que les teneurs (dosages) en P, K et Mg des sols ; voir le Tableau 1 pour la description et les unités de ces variables.

| Variable | Minimum | Maximum | Moyenne | Ecart-type | CV% | maxi-mini | maxi / maxi-mini |
|---|---|---|---|---|---|---|---|
| BTH | 25,0 | 82,0 | 60,3 | 14,2 | 24 | 57,0 | 44% |
| SGL | 17,0 | 70,0 | 45,8 | 11,2 | 25 | 53,0 | 32% |
| ORH | 25,0 | 78,0 | 58,0 | 12,5 | 22 | 53,0 | 47% |
| ORP | 11,0 | 68,0 | 42,6 | 13,4 | 31 | 57,0 | 19% |
| TRT | 25,0 | 78,0 | 51,4 | 10,6 | 21 | 53,0 | 47% |
| tCER | 23,0 | 93,0 | 62,2 | 15,2 | 25 | 70,0 | 33% |
| CZH | 15,0 | 36,0 | 28,2 | 3,6 | 13 | 21,0 | 71% |
| OLG | 15,0 | 34,0 | 26,2 | 3,9 | 15 | 19,0 | 79% |
| FVL | 10,0 | 47,0 | 27,6 | 8,9 | 32 | 37,0 | 27% |
| PIS | 15,0 | 51,0 | 35,1 | 8,6 | 24 | 36,0 | 42% |
| PRT | 12,0 | 50,0 | 33,0 | 8,9 | 27 | 38,0 | 32% |
| $P_2O_5$ Dyer | 198,9 | 317,3 | 244,6 | 26,2 | 11 | 118 | 168% |
| $P_2O_5$ Olsen | 18,0 | 131,9 | 73,6 | 18,8 | 26 | 114 | 16% |
| $K_2O$ | 191 | 369 | 263 | 35 | 13 | 178 | 107% |
| MgO | 116 | 539 | 230 | 98 | 43 | 422 | 28% |

***Références, bibliographie et brevets pertinents***

Bolland, MDA., KHM. Siddique, P Loss et MJ Baker. 1999. Comparing responses of grain legumes, wheat and canola to applications of superphosphate. Nutrient Cycling in Agroecosystems 53: 157-175.

Chessel, D et M Hanafi. 1996. Analyses de la co-inertie de K nuages de points. Revue de statistique appliquée, tome44, no2 (1996),p. 35-60

Chessel, D. & Mercier, P. (1993) Couplage de triplets statistiques et liaisons espèces environnement. In : Biométrie et Environnement. Lebreton, J.D. & Asselain, B. (Eds.) Masson, Paris. 15-44.

COMIFER 2011. Calcul de la fertilisation azotée Guide méthodologique pour l'établissement des prescriptions locales Cultures annuelles et prairies Édition 2011. Brochure éditée par le Comifer, Le Diamant A, 92909 Paris La Défense Cedex, ISBN 978-2-910393-09-0

COMIFER 2007. Fertilisation PK : grille de calcul de dose. Le groupe PKMg du COMIFER 2007

COMIFER 2001. La méthode de raisonnement de la fertilisation PK,un outil pour l'agriculture (auteur ; Jean-Marc Llorens (ESITPA, Rue grande BP 607, 27106 Val de Reuil), et groupe PK du COMIFER 2001.

Colomb, B, P Debaeke, C Jouany et JM Nolot. 2007. Phosphorus management in low input stockless cropping systems: crop and soil responses to contrasting P regimes in a 36-year experiment in southern France. Europ. J. Agron. 26: 154-165

Dodd et Mallarino. 2005. Soil-Test Phosphorus and Crop Grain Yield Responses to Long-Term Phosphorus Fertilization for Corn-Soybean Rotations. Soil Sci. Soc. Am. J. 69:1118-1128

Denoroy P, Butler F, Castillon P, Champolivier L, Duval R, Fourrie L, Hanocq D, Kouassi AS, Metraille M, Morel C, Rabourdin N, Raynal C, Savoie T et Souplet N. 2012. Vers un raisonnement innovant de la fertilisation phosphatée. Innovations Agronomiques 25: 219-230

Dolédec, S et Chessel, D. 1994. Co-inertia analysis : an alternative method for studying species-environment relationships. Freshwater Biology, 31, 277-294.

Dray, S, D Chessel et J Thiolouse. 2003. Co-inertia analysis and the linking of ecological data tables. Ecology 84(11):3078-3089

Fardeau, JC, Ch Morel et R Boniface. 1988. Pourquoi choisir la méthode Olsen pour estimer le phosphore assimilable des sols ? Agronomie 8(7):577-584

Filbet, F. 2009. Analyse numérique ; algorithme et étude mathématique. Dunod, Paris ISBN 978-2-10-052253-8.

Jordan-Meille. L. 2009. "Comparaison des méthodes de raisonnement de la fertilisation P en Europe : quels diagnostics pour quelles préconisations ?" 9èmes rencontres de la fertilisation raisonnée et de l'analyse de la terre Les 9èmes rencontres de la fertilisation raisonnée et de l'analyse de terre du COMIFER et du GEMAS se sont déroulées les 25 & 26 novembre 2009.

Lewis, DC, TD Potter & SE Weckert. 1991. The effect of nitrogen, phosphorus and potassium fertilizer applications on the seed yield of sunflower (Helianthus annuus L.) grown on sandy soils and the prediction of phosphorus and potassium responses by soil tests. Fertilizer Research 28 : 185-190

Mallarino et Blackmer. 1992. Comparison of Methods for Determining Critical Concentrations of Soil Test Phosphorus for Corn. Agron. J. 84:850-856

Mombiela, F.J., J.J. Nicholaides III, and L.A. Nelson. 1981. A method to determine the appropriate mathematical form for incorporating soil test levels in fertilizer response models for recommendation purposes. Agron. J. 73:937-941.

Morel C. Butler F., Castillon P., Champolivier L., Denoroy P., Duval R., Hanocq D., Kouassi A.-S., Kvarnstrom A., Messiga A., Métraille M., Rabeharisoa L., Raynal C., Savoie T., Sinaj S. et Ziadi N. 2011. Gestion à long terme de la dynamique du phosphore dans les sols cultivés. In Actes des 10eme Rencontres de la Fertilisation Raisonnée et de l'Analyse, Reims, 23 & 24 novembre 2011.

Olsen, S.R., C.V. Cole, F.S. Watanabe, and L.A. Dean. 1954. Estimation of available phosphorus in soils by extraction with sodium bicarbonate. U.S. Dep. of Agric. Circ. 939.

Renneson M., Dufey J., Destain J-P., Roisin C., Bock L. et Colinet G. 2011. Fertilité phosphatée: un suivi de parcelles d'essais de longue durée pour améliorer sa détermination 10 rencontres de la fertilisation raisonnée et de l'analyse Reims, du 23 au 24 novembre 2011

Schvartz, C. et JL Julien. 2009. "Apport de la Base de Données d'Analyses de Terre pour interpréter les résultats de P Olsen" Les 9èmes rencontres de la fertilisation raisonnée et de l'analyse de la terre Les 9èmes rencontres de la fertilisation raisonnée et de l'analyse de terre du COMIFER et du GEMAS se sont déroulées les 25 & 26 novembre 2009.

Thioulouse, J et S Dray. 2007. Interactive Multivariate Data Analysis in R with the ade4 and ade4TkGUI Packages. J. Stat. Software 22, Issue 5. http://www.jstatsoft.org/

Ussiri, D. A., P. N. S. Mnkeni , A. F. MacKenzie & J. M. R. Seraoka (1998): Soil test calibration studies for formulation of phosphorus fertilizer recommendations for maize in Morogoro district, Tanzania. II. Estimation of optimum fertilizer rates, Communications in Soil Science and Plant Analysis, 29:17-18, 2815-2828

**Revendications**

1.  Procédé de diagnostique de l'état phosphorique et/ou potassique et/ou magnésique de sols arables, et de préconisation des apports d'engrais minéraux P, K et/ou Mg (PKMg) comprenant la mise en relation de *pseudo* variables dites AGRO décrivant le potentiel de rendement de grandes cultures, et des *pseudo* variables dites PÉDO décrivant le caractère physicochimique des sols arables associés aux variables AGRO, comprenant d'une part ;

    • l'échantillonnage d'une parcelle et/ou d'un îlot agricole en particulier selon les règles de l'art afin d'obtenir un échantillon de terre représentatif de la parcelle / îlot agricole,
    • ledit échantillon est analysé physico - chimiquement de manière à établir la ou les valeurs de variables pédologiques (PÉDO) d'intérêts que l'on cherche à corréler, relier en sorte, à une ou des variables agronomiques (AGRO),
    et d'autre part,
    • la compilation préalable d'un jeu de données comprenant des valeurs observées pour les variables AGRO et PÉDO provenant d'un cadre géographique (cartographique) auquel appartiennent les susdits îlots et/ou parcelles agricoles décrivant donc le potentiel de rendement et des caractéristiques physico-chimiques et/ou biologiques des sols d'un territoire, avantageusement une superficie agricole utile (SAU),
    • une analyse multivariée, dite parfois multidimensionnelle, des variables agronomiques (AGRO) et pédologiques (PÉDO), et donc l'obtention d'au moins les deux premières séries de coordonnées des *composantes principales* (CPn) les plus corrélées avec chacune des variables AGRO et PÉDO,
    • suite à une *analyse co-inertielle* (COIA) sur la base des deux susdites analyses multidimensionnelle AGRO et PÉDO, la mise en relation des valeurs des *pseudo* variables AGRO et PÉDO se fait par division des valeurs des deux variables AGRO et PÉDO par les coordonnées d'une des *composantes principales* (CPn) issues de cette COIA la plus corrélée avec une ou l'autre des variables AGRO et PÉDO retenues établissant une corrélation *intrinsèque,* avantageusement sous la forme d'une fonction linéaire, entre ces deux *pseudo* variables, .
    • la ou les valeurs des *pseudo* variables PÉDO servent ainsi à définir la ou les valeurs des *pseudo* variables AGRO correspondantes selon la corrélation intrinsèque, avantageusement sous la forme d'une fonction linéaire, reliant les deux *pseudo* variables AGRO et PÉDO en question,

    et enfin,

    ➢ en référence à un potentiel de rendement attendu recherché, la comparaison des valeurs pour les variables AGRO et PÉDO provenant de la parcelle et/ou de l'îlot particuliers aux valeurs AGRO et PÉDO provenant de des susdites corrélations intrinsèques entre lesdites *pseudo* variables correspondant à ce potentiel de rendement attendu.

2.  Procédé de diagnostique de l'état phosphorique et/ou potassique et/ou magnésique de sols arables, et de préconisation des apports d'engrais minéraux P, K et/ou Mg (PKMg) selon la revendication précédente **caractérisé en ce que** les valeurs observées pour les variables AGRO et PÉDO proviennent d'une SAU d'un territoire national, régional, départemental, voire cantonale, et/ou toute autre élément d'un quelconque cadre hiérarchique cartographique.

3.  Procédé de diagnostique de l'état phosphorique et/ou potassique et/ou magnésique de sols arables, et de préconisation des apports d'engrais minéraux P, K et/ou Mg (PKMg) selon une quelconque des revendications précédentes **caractérisé en ce que** le cadre géographique (cartographique) est celui d'un territoire nationale avec un agro - climat tempéré, avantageusement comme celui de la France métropolitaine.

4.  Procédé de diagnostique de l'état phosphorique et/ou potassique et/ou magnésique de sols arables, et de préconisation des apports d'engrais minéraux P, K et/ou Mg (PKMg) selon une quelconque des revendications précédentes **caractérisé en ce que** l'analyse multi - variée, ou multidimensionnelle, est choisie parmi un groupe de méthodes analytiques dites factorielles comprenant *a priori* toutes les méthodes fondées sur des recherches d'axe principaux, dites aussi *composantes principales* (CPn), telles que les analyses générales de décomposition aux valeurs singulière, les analyses des correspondances et de correspondances multiples (ACM), l'analyse canonique, l'analyse factorielle discriminante (AFD) et, surtout, avantageusement les analyses par composante principales (ACP).

5. Procédé de diagnostique de l'état phosphorique et/ou potassique et/ou magnésique de sols arables, et de préconisation des apports d'engrais minéraux P, K et/ou Mg (PKMg) selon une quelconque des revendications précédentes **caractérisé en ce que** les valeurs observées pour les variables AGRO et PÉDO provenant d'un cadre géographique (cartographique) auquel appartiennent les susdits îlots et/ou parcelles agricoles décrivant donc le potentiel de rendement et des caractéristiques physico-chimiques et/ou biologiques des sols d'un territoire, avantageusement une superficie agricole utile (SAU) sont en nombre suffisant pour permettre une analyse statistique multi - variée, avantageusement ici une *analyse co-inertielle* (COIA), permettant d'obtenir des composantes principales (CPn), soit avantageusement et par exemple ici l'ordre d'une centaine.

6. Procédé de diagnostique de l'état phosphorique et/ou potassique et/ou magnésique de sols arables, et de préconisation des apports d'engrais minéraux P, K et/ou Mg (PKMg) selon une quelconque des revendications précédentes **caractérisé en ce que** l'analyse statistique multi - variée, ou multidimensionnelle, est une analyses co-inertielle (COIA) de k tableaux, tels que les deux tableaux constitués ici de variables agronomiques AGRO, d'une part, et d'autre part de variables pédologiques PÉDO.

7. Procédé de diagnostique de l'état phosphorique et/ou potassique et/ou magnésique de sols arables, et de préconisation des apports d'engrais minéraux P, K et/ou Mg (PKMg) selon la revendication précédente **caractérisé en ce que** k est égale ou supérieur à 2.

8. Procédé de diagnostique de l'état phosphorique et/ou potassique et/ou magnésique de sols arables, et de préconisation des apports d'engrais minéraux P, K et/ou Mg (PKMg) selon une quelconque des revendications précédentes **caractérisé en ce que** les variables AGRO sont choisies parmi un groupe non exclusif et non exhaustif comprenant les rendements agronomiques de grandes cultures, non irriguées, prédominantes et donc représentatives du potentiel de rendement du territoire en question, telles que les cultures céréalières d'hiver et de printemps, les cultures oléagineuses d'hivers et de printemps, les cultures protéagineuses d'hiver et de printemps.

9. Procédé de diagnostique de l'état phosphorique et/ou potassique et/ou magnésique de sols arables, et de préconisation des apports d'engrais minéraux P, K et/ou Mg (PKMg) selon une quelconque des revendications précédentes caractérisé et en ce que les variables PÉDO sont choisies parmi un groupe non exclusif et non exhaustif comprenant le pH, le carbone organique, la capacité d'échange cationique (CEC), les teneurs élémentaires en $N_{organique}$ et $P_{organique}$, en P, K, Ca, Mg, Fe et autre oligo-éléments, le % de saturation cationique de la CEC, la granulométrie du sol, y compris les proportions d'argile, de limons et sables, fins et grossiers, et/ou de toute autre variable descriptive de la nature et/ou du fonctionnement, biologique, physico-chimique ou mécanique, du sol.

10. Procédé de diagnostique de l'état phosphorique et/ou potassique et/ou magnésique de sols arables, et de préconisation des apports d'engrais minéraux P, K et/ou Mg (PKMg) selon une quelconque des revendications précédentes caractérisé et en ce que les variables PÉDO comprennent nécessairement les teneurs des sols en $P_2O_5$, $K_2O$ et MgO.

11. Procédé de diagnostique de l'état phosphorique et/ou potassique et/ou magnésique de sols arables, et de préconisation des apports d'engrais minéraux P, K et/ou Mg (PKMg) selon la revendication précédente **caractérisé en ce que** les teneurs des sols en $P_2O_5$ sont déterminées selon les méthodes dites Dyer, Joret-Hébert (JH), Olsen, ou comprenant la mesures de la phyto-disponibilité du P du sol (dP).

Figure 1

Figure 2

Figure 3

Figure 4

exigence Faible (Blé tendre d'hiver)

exigence Moyenne (pois protéagineux)

exigence Forte (colza)

Figure 5

Figure 6 :

Figure 7

Figure 8

Figure 9

Figure 10

Europäisches
Patentamt

European
Patent Office

Office européen
des brevets

**RAPPORT DE RECHERCHE EUROPEENNE**

Numéro de la demande

EP 14 36 6001

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | US 5 668 719 A (BOBROV VLADIMER A [BY] ET AL) 16 septembre 1997 (1997-09-16) * abrégé * * colonne 3, ligne 45 - ligne 49 * * colonne 11, ligne 45 - ligne 50 * * colonne 12, ligne 5 - ligne 40 * * colonne 14, ligne 1 - ligne 20 * * revendications; figures * | 1-11 | INV. A01C21/00 G06F17/18 G06K9/62 |
| Y | Anonymous: "How to Reduce Number of Variables and Detect Relationships, Principal Components and Factor Analysis", , 18 décembre 2009 (2009-12-18), XP055101115, Extrait de l'Internet: URL:http://www.statsoft.com/Textbook/Principal-Components-Factor-Analysis [extrait le 2014-02-10] * le document en entier * | 1-11 | |
| A | WO 01/33505 A2 (MONSANTO CO [US]; MCGUIRE JOHN DENNIS [US]; PEARSON RANDALL SCOTT [US]) 10 mai 2001 (2001-05-10) * abrégé * * page 20, ligne 8 - ligne 35 * * page 21, ligne 1 - ligne 34 * * revendications; figures * | 1-11 | DOMAINES TECHNIQUES RECHERCHES (IPC) A01C G06F G06K |
| A | US 2009/254314 A1 (IVOSEV GORDANA [CA] ET AL) 8 octobre 2009 (2009-10-08) * abrégé * * revendications; figures * | 1-11 | |
| A | US 2005/060103 A1 (CHAMNESS KEVIN ANDREW [US]) 17 mars 2005 (2005-03-17) * abrégé * * revendications; figures * | 1-11 | |

Le présent rapport a été établi pour toutes les revendications

| Lieu de la recherche | Date d'achèvement de la recherche | Examinateur |
|---|---|---|
| La Haye | 15 juillet 2014 | Oltra García, R |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

# EP 2 774 467 A1

**ANNEXE AU RAPPORT DE RECHERCHE EUROPEENNE
RELATIF A LA DEMANDE DE BREVET EUROPEEN NO.**

EP 14 36 6001

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

15-07-2014

| Document brevet cité au rapport de recherche | | Date de publication | Membre(s) de la famille de brevet(s) | | Date de publication |
|---|---|---|---|---|---|
| US 5668719 | A | 16-09-1997 | AUCUN | | |
| WO 0133505 | A2 | 10-05-2001 | AU | 2469601 A | 14-05-2001 |
| | | | US | 7058197 B1 | 06-06-2006 |
| | | | WO | 0133505 A2 | 10-05-2001 |
| US 2009254314 | A1 | 08-10-2009 | CA | 2763991 A1 | 02-12-2010 |
| | | | EP | 2435165 A1 | 04-04-2012 |
| | | | JP | 5441199 B2 | 12-03-2014 |
| | | | JP | 2012528327 A | 12-11-2012 |
| | | | US | 2009254314 A1 | 08-10-2009 |
| | | | WO | 2010138133 A1 | 02-12-2010 |
| US 2005060103 | A1 | 17-03-2005 | CN | 1849599 A | 18-10-2006 |
| | | | EP | 1665076 A2 | 07-06-2006 |
| | | | JP | 4699367 B2 | 08-06-2011 |
| | | | JP | 2007505494 A | 08-03-2007 |
| | | | KR | 20060123098 A | 01-12-2006 |
| | | | TW | I261738 B | 11-09-2006 |
| | | | US | 2005060103 A1 | 17-03-2005 |
| | | | WO | 2005036314 A2 | 21-04-2005 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5668719 A
- WO 0133505 A2
- US 20090254314 A1
- US 20050060103 A1

**Littérature non-brevet citée dans la description**

- **BALBA ; BRAY.** *Soil Sci. Soc. Am. J.,* 1956, vol. 20 (4), 515-518
- **BOLLAND, MDA. ; KHM. SIDDIQUE ; P LOSS ; MJ BAKER.** Comparing responses of grain legumes, wheat and canola to applications of superphosphate. *Nutrient Cycling in Agroecosystems,* 1999, vol. 53, 157-175
- **CHESSEL, D ; M HANAFI.** Analyses de la co-inertie de K nuages de points. *Revue de statistique appliquée,* 1996, vol. 44 (2), 35-60
- Couplage de triplets statistiques et liaisons espèces environnement. **CHESSEL, D. ; MERCIER, P.** Biométrie et Environnement. 1993, 15-44
- **COMIFER.** Calcul de la fertilisation azotée Guide méthodologique pour l'établissement des prescriptions locales Cultures annuelles et prairies Édition 2011. 2011
- **COMIFER.** Fertilisation PK : grille de calcul de dose. *Le groupe PKMg du COMIFER 2007,* 2007
- **COMIFER ; JEAN-MARC LLORENS.** La méthode de raisonnement de la fertilisation PK,un outil pour l'agriculture. *ESITPA,* 2001
- **COLOMB, B ; P DEBAEKE ; C JOUANY ; JM NOLOT.** Phosphorus management in low input stockless cropping systems: crop and soil responses to contrasting P regimes in a 36-year experiment in southern France. *Europ. J. Agron.,* 2007, vol. 26, 154-165
- **DODD ; MALLARINO.** Soil-Test Phosphorus and Crop Grain Yield Responses to Long-Term Phosphorus Fertilization for Corn-Soybean Rotations. *Soil Sci. Soc. Am. J.,* 2005, vol. 69, 1118-1128
- **DENOROY P ; BUTLER F ; CASTILLON P ; CHAMPOLIVIER L ; DUVAL R ; FOURRIE L ; HANOCQ D ; KOUASSI AS ; METRAILLE M ; MOREL C.** Vers un raisonnement innovant de la fertilisation phosphatée. *Innovations Agronomiques,* 2012, vol. 25, 219-230
- **DOLÉDEC, S ; CHESSEL, D.** Co-inertia analysis : an alternative method for studying species-environment relationships. *Freshwater Biology,* 1994, vol. 31, 277-294

- **DRAY, S ; D CHESSEL ; J THIOLOUSE.** Co-inertia analysis and the linking of ecological data tables. *Ecology,* 2003, vol. 84 (11), 3078-3089
- **FARDEAU, JC ; CH MOREL ; R BONIFACE.** Pourquoi choisir la méthode Olsen pour estimer le phosphore assimilable des sols ?. *Agronomie,* 1988, vol. 8 (7), 577-584
- **FILBET, F.** *Analyse numérique ; algorithme et étude mathématique,* 2009, ISBN 978-2-10-052253-8
- **JORDAN-MEILLE. L.** Comparaison des méthodes de raisonnement de la fertilisation P en Europe : quels diagnostics pour quelles préconisations ?. *9èmes rencontres de la fertilisation raisonnée et de l'analyse de la terre Les 9èmes rencontres de la fertilisation raisonnée et de l'analyse de terre du COMIFER et du GEMAS,* 25 Novembre 2009
- **LEWIS, DC ; TD POTTER ; SE WECKERT.** The effect of nitrogen, phosphorus and potassium fertilizer applications on the seed yield of sunflower (Helianthus annuus L.) grown on sandy soils and the prediction of phosphorus and potassium responses by soil tests. *Fertilizer Research,* 1991, vol. 28, 185-190
- **MALLARINO ; BLACKMER.** *Comparison of Methods for Determining Critical Concentrations of Soil Test Phosphorus for Corn. Agron. J.,* 1992, vol. 84, 850-856
- **MOMBIELA, F.J. ; J.J. NICHOLAIDES III ; L.A. NELSON.** A method to determine the appropriate mathematical form for incorporating soil test levels in fertilizer response models for recommendation purposes. *Agron. J.,* 1981, vol. 73, 937-941
- **MOREL C. ; BUTLER F. ; CASTILLON P. ; CHAMPOLIVIER L. ; DENOROY P. ; DUVAL R. ; HANOCQ D. ; KOUASSI A.-S. ; KVARNSTROM A. ; MESSIGA A.** Gestion à long terme de la dynamique du phosphore dans les sols cultivés. *Actes des 10eme Rencontres de la Fertilisation Raisonnée et de l'Analyse,* 23 Novembre 2011

- **OLSEN, S.R. ; C.V. COLE ; F.S. WATANABE ; L.A. DEAN.** Estimation of available phosphorus in soils by extraction with sodium bicarbonate. U.S. Dep. of Agric. Circ, 1954, 939
- **RENNESON M. ; DUFEY J. ; DESTAIN J-P. ; ROISIN C. ; BOCK L. ; COLINET G.** *Fertilité phosphatée: un suivi de parcelles d'essais de longue durée pour améliorer sa détermination 10 rencontres de la fertilisation raisonnée et de l'analyse Reims,* 23 Novembre 2011
- **SCHVARTZ, C. ; JL JULIEN.** Apport de la Base de Données d'Analyses de Terre pour interpréter les résultats de P Olsen. *Les 9èmes rencontres de la fertilisation raisonnée et de l'analyse de la terre Les 9èmes rencontres de la fertilisation raisonnée et de l'analyse de terre du COMIFER et du GEMAS,* 25 Novembre 2009
- **THIOULOUSE, J ; S DRAY.** Interactive Multivariate Data Analysis in R with the ade4 and ade4TkGUI Packages. *J. Stat. Software,* 2007, vol. 22 (5, http://www.jstatsoft.org
- **USSIRI, D. A. ; P. N. S. MNKENI ; A. F. MACKENZIE ; J. M. R. SERAOKA.** Soil test calibration studies for formulation of phosphorus fertilizer recommendations for maize in Morogoro district, Tanzania. II. Estimation of optimum fertilizer rates. *Communications in Soil Science and Plant Analysis,* 1998, vol. 29 (17-18), 2815-2828